# EUROPEAN PATENT APPLICATION

(11) **EP 4 130 943 A1**
(43) Date of publication of application: **08.02.2023**
(21) Application number: 21791580.0
(22) Date of filing: 21.04.2021
(51) Int. Cl.: G06F 3/0346

(54) **TOUCH OPERATION METHOD AND DEVICE**

(30) Priority: 23.04.2020 CN 202010328253
(71) Applicant: HUAWEI TECHNOLOGIES CO., LTD., Shenzhen, Guangdong 518129 (CN)
(72) Inventor: WU, Dongping, Shenzhen, Guangdong 518129 (CN); CAI, Weigang, Shenzhen, Guangdong 518129 (CN); CHEN, Leilei, Shenzhen, Guangdong 518129 (CN); TIAN, Lihui, Shenzhen, Guangdong 518129 (CN); LI, Danhong, Shenzhen, Guangdong 518129 (CN); LI, Hang, Shenzhen, Guangdong 518129 (CN)
(74) Representative: Pfenning, Meinig & Partner mbB
(86) International application number: PCT/CN2021/088778
(87) International publication number: WO 2021/213449

(57) **Abstract**

Embodiments of this application relate to the field of electronic technologies, and provide a touch operation method and a device, so that in a scenario in which an electronic device is held with one hand, response processing can be performed for a touch operation on a side edge of the electronic device, and a finger of a user does not need to reach a control in a middle region of a screen to perform an operation. Therefore, an operation amplitude of the finger can be shortened, a one-hand operation of the user can be facilitated, and user experience can be improved. A specific solution is as follows: The touch operation method is applied to an electronic device having a curved screen, where the curved screen includes a side edge of the electronic device. After detecting that the side edge is touched, the electronic device determines a target region, where the target region is a contact region of a user on the side edge in a holding mode. The electronic device prompts a location of the target region. After detecting a touch operation performed by the user on the target region, the electronic device performs a corresponding response operation for the touch operation. Embodiments of this application are applied to the touch operation.

## Description

This application claims priority to Chinese Patent Application No. 202010328253.7, filed with the China National Intellectual Property Administration on April 23, 2020 and entitled "TOUCH OPERATION METHOD AND DEVICE", which is incorporated herein by reference in its entirety.

### TECHNICAL FIELD

Embodiments of this application relate to the field of electronic technologies, and in particular, to a touch operation method and a device.

### BACKGROUND

To improve visual experience of a user, a screen of an electronic device such as a mobile phone or a tablet computer is increasingly large. In a one-hand operation scenario, when holding an electronic device, a finger of a user can hardly reach a control such as an icon or a button on a screen to perform a touch operation. Therefore, the user operation is unfriendly, and user experience is poor. Particularly, in a scenario in which there is a high requirement on a one-hand operation such as taking a selfie, a user operation is inconvenient.

### SUMMARY

Embodiments of this application provide a touch operation method and a device, so that in a scenario in which an electronic device is held with one hand, response processing can be performed for a touch operation on a side edge of the electronic device, to replace a touch operation performed by a user in a middle region of a curved screen, that is, a finger of the user does not need to reach a control in the middle region of the screen to perform the operation. Therefore, an operation amplitude of the finger can be shortened, a one-hand operation of the user can be facilitated, and user experience can be improved.

To achieve the foregoing objectives, the following technical solutions are used in embodiments of this application.

According to one aspect, an embodiment of this application provides a touch operation method, applied to an electronic device having a curved screen, where the curved screen includes a side edge of the electronic device, and the method includes: detecting that the side edge is touched. Then, the electronic device determines a target region, where the target region is a contact region of a user on the side edge in a holding mode. The electronic device prompts a location of the target region. After detecting a touch operation performed by the user on the target region, the electronic device performs a corresponding response operation for the touch operation.

In this solution, the electronic device may identify the target region in the holding mode, and perform response processing for the touch operation on the side edge of the electronic device, to replace a touch operation performed by the user in a middle region of the curved screen, that is, a finger of the user does not need to reach a control in the middle region of the screen to perform the operation. Therefore, an operation amplitude of the finger can be shortened, a one-hand operation of the user can be facilitated, and user experience can be improved.

In a possible design, that the electronic device prompts a location of the target region includes: The electronic device displays a prompt mark at the location of the target region.

In this way, the electronic device may visually prompt the user with the location of the target region, so that the user subsequently performs a touch operation on the location to control the electronic device.

In another possible design, that the electronic device prompts a location of the target region includes: The electronic device displays a prompt mark at the location of the target region, and vibrates.

A sound is usually generated during vibration. In this way, the electronic device may visually, tactilely, and audibly prompt the user with the location of the target region, so that the user subsequently performs a touch operation on the location to control the electronic device.

In another possible design, before the electronic device prompts the location of the target region, the method further includes: The electronic device detects that a hand of the user releases the target region.

That is, after detecting that the hand that is in contact with the target region and that is of the user releases the target region, the electronic device locks the location of the target region, and prompts the user with the location, so that the user subsequently performs a touch operation on the location to control the electronic device.

In another possible design, that the electronic device determines a target region includes: The electronic device determines the target region based on a preset algorithm model and touch information. The touch information includes one or more of a quantity of contact regions of the user on the side edge, a relative location of the contact region, an area of the contact region, or a contact semaphore.

In this solution, the electronic device may input the touch information to the algorithm model. After identifying that a current mode is a holding mode by using the algorithm model, the electronic device may determine a location of the target region, and output information about the location.

In another possible design, the electronic device further includes a gyroscope. That the electronic device determines the target region based on a preset algorithm model and touch information includes: The electronic device determines the target region based on the preset algorithm model, the touch information, and gyroscope data.

That is, the electronic device may input the touch information and the gyroscope data to the algorithm model. After identifying that a current mode is a holding mode by using the algorithm model, the electronic device may determine a location of the target region with reference to a posture that is of the electronic device and that is indicated by the gyroscope data, and output information about the location.

In another possible design, the algorithm model includes a left-hand matching model and a right-hand matching model, the left-hand matching model is used to determine a target region in a left-hand holding mode, and the right-hand matching model is used to determine a target region in a right-hand holding mode.

In this solution, the electronic device may separately identify different holding modes based on the left-hand matching model and the right-hand matching model, to determine target regions in the different holding modes.

In another possible design, that the electronic device determines a target region includes: The electronic device determines a holding mode based on touch information. The touch information includes one or more of a quantity of contact regions of the user on the side edge, a relative location of the contact region, an area of the contact region, or a contact semaphore. The electronic device determines the target region in the holding mode based on the touch information.

In this solution, the electronic device may first determine, based on current real-time touch information, that the electronic device is in the holding mode, and then determine the target region in the holding mode.

In another possible design, the side edge of the electronic device includes a first side edge and a second side edge that are opposite to each other. That the electronic device determines a holding mode based on touch information includes: If the electronic device determines, based on the touch information, that the first side edge includes two contact regions, and the second side edge includes three contact regions, the electronic device determines that the electronic device is in the holding mode. That the electronic device determines the target region in the holding mode based on the touch information includes: The electronic device determines that the target region is located on the first side edge including the two contact regions. The electronic device determines a contact region with a smaller area in the two contact regions included on the first side edge as the target region.

In this solution, in the holding mode, a contact region of the thumb may be the target region. Based on a holding habit, the three contact regions on the second side edge may be respectively contact regions of the middle finger, the ring finger, and the little finger. The two contact regions on the first side edge may be respectively contact regions of the thumb and the thenar, and the contact region of the thumb is usually smaller than the contact region of the thenar. Therefore, the contact region of the thumb may be determined, that is, the target region is determined.

In another possible design, that the electronic device determines a target region includes: The electronic device prompts the user to perform a preset operation in a to-be-operated region on the side edge. If the electronic device detects the preset operation performed by the user on the side edge, the electronic device determines that a region on which the preset operation is performed is the target region.

In this solution, after detecting that the side edge is touched, the electronic device may prompt the user to actively set a to-be-operated target region on the side edge. The user may perform the preset operation prompted by the electronic device, and a location on which the preset operation is performed is a location of the target region.

In another possible design, the touch operation includes a single-tap operation, a double-tap operation, a touch and hold operation, a slide operation, or a pressure press operation. That the electronic device performs a corresponding response operation for the touch operation includes: In response to the touch operation, the electronic device selects a selection option, a control, or a parameter, switches the selected selection option, control, or parameter, or adjusts a value of the parameter.

That is, in response to the operation such as the single-tap operation, the double-tap operation, the touch and hold operation, the slide operation, or the pressure press operation performed by the user on the target region on the side edge, the electronic device may control the electronic device to select the selection option, control, or parameter, switch the selected selection option, control, or parameter, or adjust the value of the parameter.

In another possible design, the curved screen further includes a middle region. That the electronic device performs a corresponding response operation for the touch operation includes: If the touch operation is a double-tap operation, the electronic device switches a selected selection option, control, or parameter; if the touch operation is a single-tap operation, the electronic device performs the single-tap operation on the selected selection option or control; if the touch operation is a touch and hold operation, the electronic device performs the touch and hold operation on the selected selection option or control; if the touch operation is a slide left or right operation, the electronic device performs the slide left or right operation in the middle region of the curved screen; or if the touch operation is a slide up or down operation, the electronic device performs the slide up or down operation in the middle region of the curved screen.

That is, in response to the touch operation performed by the user on the target region on the side edge, the electronic device may perform the corresponding response operation on the middle region.

In another possible design, that the electronic device performs a corresponding response operation for the touch operation includes: The electronic device performs the corresponding response operation for the touch operation based on an application.

In this way, the electronic device may perform the corresponding response operation for the touch operation based on an application currently used in real time.

In another possible design, the application is a camera application. That the electronic device performs the corresponding response operation for the touch operation based on an application includes: If the touch operation is the single-tap operation, the electronic device selects a selection option, a control, or a parameter in the camera application; if the touch operation is a slide left or right operation, the electronic device switches the selected selection option, control, or parameter; if the touch operation is a slide up or down operation, the electronic device increases or decreases a value of the selected parameter, or if the touch operation is the double-tap operation, the electronic device quickly takes a photo.

In this way, when using the camera application, the electronic device may perform the corresponding response operation for the touch operation based on the camera application. The electronic device may perform photographing processing on the touch operation performed by the user on the target region on the side edge, to replace a related photographing operation performed by the user in the middle region of the screen, that is, a finger of the user does not need to reach a control in the middle region of the screen to perform the photographing operation. Therefore, an operation amplitude of the finger can be shortened, and photographing of the user can be facilitated.

In another possible design, the application is an e-book reader. That the electronic device performs the corresponding response operation for the touch operation based on an application includes: If the touch operation is the slide operation, the electronic device turns a page.

In this way, when using the e-book reader, the electronic device may perform the corresponding response operation for the touch operation based on the e-book reader. The electronic device may turn the page for the slide operation performed by the user on the target region on the side edge, to replace the slide operation or the like performed by the user in the middle region of the curved screen, that is, a finger of the user does not need to reach the middle region of the curved screen to perform page turning control. Therefore, an operation amplitude of the finger can be shortened, page turning of the user can be facilitated, reading can be smoother, and reading experience of the user can be improved.

In another possible design, that the electronic device determines a target region includes: The electronic device determines a type of the holding mode and the target region, where the type of the holding mode includes the left-hand holding mode or the right-hand holding mode. That the electronic device performs a corresponding response operation for the touch operation includes: If the type of the holding mode is the left-hand holding mode, the electronic device performs a corresponding first response operation for the touch operation; or if the type of the holding mode is the right-hand holding mode, the electronic device performs a corresponding second response operation for the touch operation.

That is, for a same touch operation, different types of holding modes may correspond to different response operations.

According to another aspect, an embodiment of this application provides an electronic device. The electronic device includes a curved screen, where the curved screen includes a side edge of the electronic device; one or more processors; a memory; and one or more computer programs, where the one or more computer programs are stored in the memory, the one or more computer programs include instructions, and when the instructions are executed by the electronic device, the electronic device is enabled to perform the touch operation method performed by the electronic device according to any possible design of the foregoing aspect.

According to another aspect, an embodiment of this application provides a touch apparatus. The apparatus is included in an electronic device. The apparatus has functions of implementing behavior of the electronic device in any method in the foregoing aspects and the possible designs, so that the electronic device performs the touch operation method performed by the electronic device according to any possible design of the foregoing aspect. The functions may be implemented by hardware, or may be implemented by hardware executing corresponding software. The hardware or the software includes at least one module or unit corresponding to the foregoing functions. For example, the apparatus may include a detection module, a prompt module, a processing module, and the like.

According to another aspect, an embodiment of this application provides an electronic device. The electronic device includes one or more processors and a memory. The memory stores code. When the code is executed by the electronic device, the electronic device is enabled to perform the touch operation method performed by the electronic device according to any possible design of the foregoing aspect.

According to another aspect, an embodiment of this application provides a computer-readable storage medium, including computer instructions. When the computer instructions are run on an electronic device, the electronic device is enabled to perform the touch operation method according to any possible design of the foregoing aspect.

According to another aspect, an embodiment of this application provides a computer program product. When the computer program product runs on a computer, the computer is enabled to perform the touch operation method performed by the electronic device according to any possible design of the foregoing aspect.

According to another aspect, an embodiment of this application provides a chip system. The chip system is applied to an electronic device. The chip system includes one or more interface circuits and one or more processors. The interface circuit and the processor are interconnected through a line. The interface circuit is configured to: receive a signal from a memory in the electronic device, and send the signal to the processor, where the signal includes computer instructions stored in the memory. When the processor executes the computer instructions, the electronic device is enabled to perform the touch operation method according to any possible design of the foregoing aspect.

For beneficial effects corresponding to the foregoing other aspects, refer to the descriptions of the beneficial effects in the method aspect. Details are not described herein again.

### BRIEF DESCRIPTION OF DRAWINGS

FIG. 1 is a schematic diagram of a structure of an electronic device according to an embodiment of this application;
FIG. 2 is a flowchart of a touch operation method according to an embodiment of this application;
FIG. 3 is a flowchart of determining a target region according to an embodiment of this application;
FIG. 4A and FIG. 4B are a group of schematic diagrams of middle regions and side edges of curved screens according to an embodiment of this application;
FIG. 5A to FIG. 5F are a group of schematic diagrams of one-hand holding and target regions according to an embodiment of this application;
FIG. 6A and FIG. 6B are a group of schematic diagrams of side edges of curved screens according to an embodiment of this application;
FIG. 6C and FIG. 6D are a group of schematic diagrams of one-hand holding according to an embodiment of this application;
FIG. 7A is another flowchart of determining a target region according to an embodiment of this application;
FIG. 7B and FIG. 7C are a group of schematic diagrams of prompt interfaces according to an embodiment of this application;
FIG. 8A and FIG. 8B are a group of schematic diagrams of prompt marks in target regions according to an embodiment of this application;
FIG. 9(a) to FIG. 9(d) are a group of schematic diagrams of touch operations and responses according to an embodiment of this application;
FIG. 10(a) to FIG. 10(d) are another group of schematic diagrams of touch operations and responses according to an embodiment of this application;
FIG. 11(a) to FIG. 11(d) are another group of schematic diagrams of touch operations and responses according to an embodiment of this application;
FIG. 12(a) to FIG. 12(d) are another group of schematic diagrams of touch operations and responses according to an embodiment of this application;
FIG. 13 is a schematic diagram of a video playing scenario according to an embodiment of this application;
FIG. 14(a) to FIG. 14(d) are another group of schematic diagrams of touch operations and responses according to an embodiment of this application;
FIG. 15 is a group of schematic diagrams of setting mapping relationships according to an embodiment of this application;
FIG. 16 is a schematic diagram of prompting a mapping relationship according to an embodiment of this application;
FIG. 17 is a schematic diagram of a software structure of an electronic device according to an embodiment of this application; and
FIG. 18 is a flowchart of another touch operation according to an embodiment of this application.

### DESCRIPTION OF EMBODIMENTS

The following describes technical solutions in embodiments of this application with reference to accompanying drawings in embodiments of this application. In descriptions in embodiments of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, in the descriptions in embodiments of this application, "a plurality of" means two or more.

Terms such as "first" and "second" mentioned below are merely intended for a purpose of description, and shall not be understood as an indication or implication of relative importance or as an implication of a quantity of technical features. Therefore, a feature limited by "first" or "second" may explicitly or implicitly include one or more features. In the descriptions of embodiments, unless otherwise specified, "a plurality of" means two or more.

In a scenario in which a user needs to grasp a handrail such as taking a selfie, carrying things, or taking a bus or a subway, when using an electronic device such as a mobile phone or a tablet computer, the user usually needs to hold the electronic device with one hand and perform an operation. Currently, as a screen of the electronic device such as the mobile phone or the tablet computer is increasingly large, when the user holds the electronic device with one hand, a finger can hardly reach a control such as an icon or a button on the screen to perform a touch operation. Therefore, it is increasingly inconvenient for the user to perform a one-hand operation on the electronic device.

Embodiments of this application provide a touch operation method, and the method may be applied to an electronic device, so that in a one-hand holding mode, response processing can be performed for a touch operation such as single-tap (or referred to as tap) or slide performed by a user on a target region on a side edge of the electronic device, to replace a touch operation performed by the user in a middle region (or referred to as a main region) of a screen, that is, a finger of the user does not need to reach a control in the middle region of the screen to perform the operation. Therefore, an operation amplitude of the finger can be shortened, a one-hand operation of the user can be facilitated, a one-hand shortcut operation manner can be added, and user experience can be improved.

For example, the target region may be one of contact regions of a hand of the user on the side edge of the electronic device in the one-hand holding mode. In some embodiments, the target region may be a contact region of the thumb on a side edge of the electronic device in the one-hand holding mode. In this case, the electronic device may perform response processing for a touch operation performed by the thumb of the user on the contact region, and a finger of the user does not need to reach a control in the middle region of the screen to perform an operation. Therefore, a one-hand operation of the user can be facilitated.

Particularly, the electronic device may have a curved screen, and the curved screen bends toward the side edge of the electronic device. Therefore, the side edge of the electronic device is also a side edge of the curved screen. The curved screen may be a touchscreen, and there is a touch sensor on the side edge of the curved screen. The touch sensor may be configured to detect a one-hand holding operation of the user, a touch operation performed by the user on the target region, and the like.

It may be understood that the screen of the electronic device may not be a curved screen. A touch sensor may be disposed on the side edge of the electronic device. The touch sensor may be configured to detect a one-hand holding operation of the user, a touch operation performed by the user on the target region, and the like.

The electronic device may be a device such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

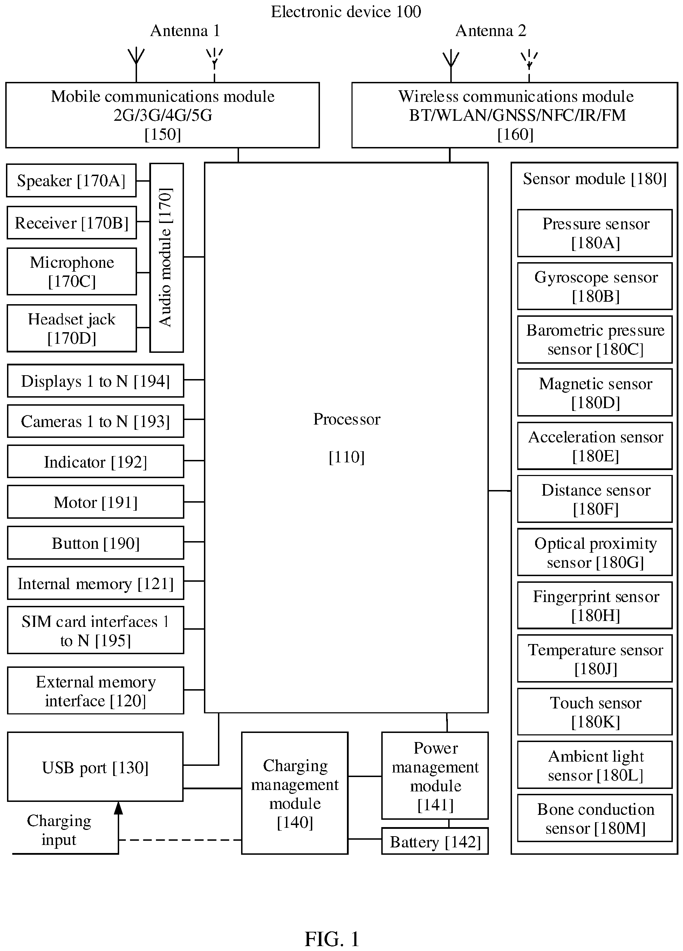

For example, FIG. 1 is a schematic diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure touch sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The charging management module 140 is configured to receive a charging input from a charger. The charging management module 140 supplies power to the electronic device through the power management module 141 while charging the battery 142.

The power management module 141 is configured to connect to the battery 142, the charging management module 140, and another component. The power management module 141 may be further configured to monitor parameters such as a battery capacity, a battery cycle count, and a battery health status (electricity leakage or impedance).

A wireless communication function of the electronic device 100 may be implemented by using the antenna 1, the antenna 2, the mobile communications module 150, the wireless communications module 160, the modem processor, the baseband processor, and the like.

The mobile communications module 150 may provide a solution that is applied to the electronic device 100 and that includes wireless communication such as 2G, 3G, 4G, and 5G.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1. In some embodiments, the display 194 may be a curved screen, and the curved screen may bend toward a side edge of the electronic device 100, to increase a screen-to-body ratio of the electronic device 100.

The electronic device 100 may implement a photographing function through the ISP, the camera 193, the video codec, the GPU, the display 194, the application processor, and the like. The camera 193 may include a front-facing camera and a rear-facing camera.

The external memory interface 120 may be configured to connect to an external storage card, for example, a Micro SD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound play function and an image play function), and the like. The data storage area may store data (such as audio data and an address book) and the like created during use of the electronic device 100. In addition, the internal memory 121 may include a high-speed random access memory, and may further include a nonvolatile memory, for example, at least one magnetic disk storage device, a flash memory device, a universal flash storage (universal flash storage, UFS), or the like.

In this embodiment of this application, the processor 110 may run the instructions stored in the internal memory 121, identify a one-hand holding mode of a user, identify a contact region of a hand of the user on the side edge of the electronic device 100, determine a target region, and perform response processing for a touch operation performed by the user on the target region.

The electronic device 100 may implement, by using the audio module 170, the speaker 170A, the receiver 170B, the microphone 170C, the headset jack 170D, the application processor, and the like, an audio function such as music playing, recording, detecting a voice command of a user, or providing a sound prompt for the user.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change of the capacitance. When a touch operation is performed on the display 194, the electronic device 100 detects intensity of the touch operation based on the pressure sensor 180A. The electronic device 100 may also calculate a touch location based on a detection signal of the pressure sensor 180A. In some embodiments, touch operations performed on a same touch location but having different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on the icon of Messages, an instruction for creating a new SMS message is executed.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor 180K may transfer the detected touch operation to the application processor, to determine a type of a touch event. A visual output related to the touch operation may be provided through the display 194. In some other embodiments, the touch sensor 180K may also be disposed on a surface of the electronic device 100 at a location different from that of the display 194.

In some embodiments, the touchscreen may be a curved screen, and a plurality of touch sensors 180K (for example, may be a capacitive touch sensor array or a pressure touch sensor array) may be disposed on the curved screen. A touch sensor 180K on a side edge of the curved screen may detect a one-hand holding operation of the user, a touch operation performed by the user on the side edge, and the like.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt, or may be configured to provide a touch vibration feedback. In this embodiment of this application, the motor 191 may prompt the user with a fact that the electronic device 100 has locked a target region.

The indicator 192 may be an indicator light, and may be configured to indicate a charging status and a power change, or may be configured to indicate a message, a missed call, a notification, and the like. In this embodiment of this application, the indicator 192 may prompt the user with a fact that the electronic device 100 has locked a target region.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

In some embodiments of this application, the electronic device 100 has a touchscreen, and the touchscreen is a curved screen. There is a touch sensor 180K on a side edge of the curved screen, which may be configured to detect a one-hand holding operation of the user. The processor 110 may run the instructions stored in the internal memory 121, identify a one-hand holding mode of the user, identify a contact region of a hand of the user on the side edge of the electronic device 100, and determine a target region. The touch sensor 180K on the side edge of the curved screen may further detect a touch operation performed by the user on the target region. The processor 110 may run the instruction stored in the internal memory 121, and perform response processing for the touch operation performed by the user on the target region, to replace a touch operation performed by the user in a middle region of the curved screen. In this solution, in the one-hand holding mode, the user does not need to specially reach a control in the middle region of the curved screen to perform the touch operation, but can perform the operation conveniently by directly using the side edge of the electronic device. Therefore, user experience is high.

The following describes, by using an example in which the electronic device is a mobile phone having the hardware structure shown in FIG. 1, and a screen of the mobile phone is a curved screen having a touch function, a touch operation method provided in embodiments of this application.

In embodiments of this application, in a one-hand holding mode, the mobile phone can perform response processing for a touch operation such as single-tap or slide performed by a user on a target region on a side edge of the mobile phone, to replace a touch operation performed by the user in a middle region of the curved screen, that is, a finger of the user does not need to reach a control in the middle region of the curved screen to perform the operation. Therefore, a one-hand operation of the user can be facilitated, a one-hand shortcut operation manner can be added, and user experience can be improved.

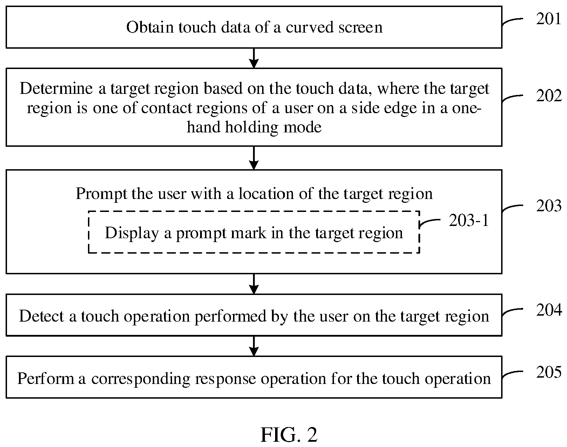

Refer to FIG. 2. An embodiment of this application provides a touch operation method. The method may include the following steps.

201: A mobile phone obtains touch data of a curved screen.

The mobile phone may periodically obtain the touch data of the curved screen, or the mobile phone may monitor the touch data of the curved screen in real time. This is not limited in this embodiment of this application.

The curved screen is a touchscreen, and the curved screen may bend toward a side edge of the mobile phone. For example, the curved screen may be specifically a capacitive touchscreen, a pressure touchscreen, another touchscreen, or a hybrid touchscreen. A specific type of the touchscreen is not limited in this embodiment of this application.

For example, if the curved screen is the capacitive touchscreen, the curved screen may include a capacitive touch sensor array. When a user touches the curved screen and does not touch the curved screen, capacitance data detected by a capacitive touch sensor in the array is different. The touch data includes capacitance data detected by each capacitive sensor in the array.

For another example, if the curved screen is the pressure touchscreen, the curved screen may include a pressure touch sensor array. When a user touches the curved screen and does not touch the curved screen, pressure data detected by a pressure touch sensor in the array is different. The touch data includes pressure data detected by each pressure touch sensor in the array.

For another example, a home screen in a middle region of the curved screen is a capacitive touchscreen, and a screen on a side edge of the curved screen is a hybrid touchscreen including a capacitive touchscreen and a pressure touchscreen.

202: The mobile phone determines a target region based on the touch data, where the target region is one of contact regions of the user on the side edge in a one-hand holding mode.

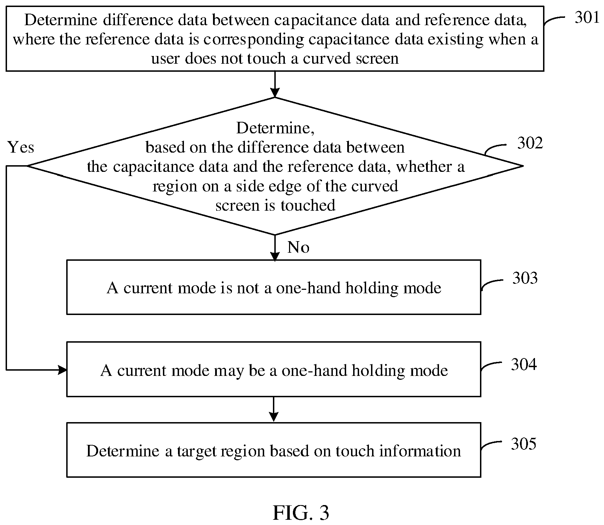

The following describes step 202 by using an example in which the curved screen is a capacitive touchscreen, and the touch data is capacitance data. Refer to FIG. 3. Step 202 may include the following steps.

301: The mobile phone determines difference data between the capacitance data and reference data, where the reference data is corresponding capacitance data existing when the user does not touch the curved screen.

The reference data may also be referred to as a baseline (baseline), and the difference data between the capacitance data and the reference data may also be referred to as a differential value.

Because the curved screen includes a plurality of touch sensors, the capacitance data obtained by the mobile phone also includes capacitance data respectively corresponding to the plurality of touch sensors. The mobile phone may determine difference data between capacitance data corresponding to each touch sensor and the reference data.

The mobile phone may periodically perform step 301, or may perform step 301 in real time after obtaining the capacitance data.

302: The mobile phone determines, based on the difference data between the capacitance data and the reference data, whether a region on the side edge of the curved screen is touched, and then the mobile phone may perform step 303 or step 304.

The middle region of the curved screen is a region other than the side edge (or referred to as an edge) of the curved screen, and includes a central region of the curved screen and a region close to the central region. The middle region of the curved screen may also be referred to as a main region.

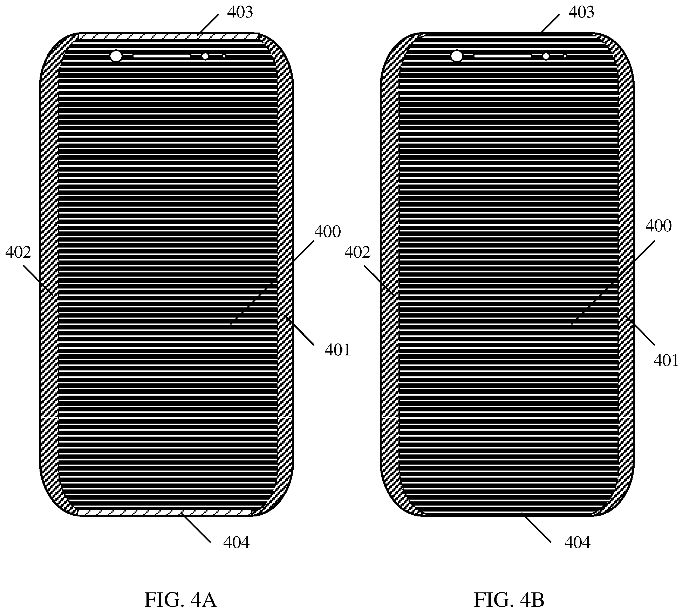

For example, for the middle region of the curved screen, refer to a region 400 filled with horizontal lines shown in FIG. 4A. For the side edge of the curved screen, refer to regions 401 to 404 filled with left slashes shown in FIG. 4A. The curved screen includes the regions 400 to 404. The curved screen separately bends toward four side edges of the mobile phone, and the four side edges of the mobile phone each belong to a part of the curved screen.

For another example, for the middle region of the curved screen, refer to a region 400 filled with horizontal lines shown in FIG. 4B. For the side edge of the curved screen, refer to regions 401 to 404 filled with left slashes shown in FIG. 4B. The curved screen includes the regions 400 to 402. The curved screen bends toward two side edges of the mobile phone, the side edge 401 and the side edge 402 belong to a part of the curved screen, and the side edge 403 and the side edge 404 do not belong to a part of the curved screen.

The following mainly uses the mobile phone having the curved screen shown in FIG. 4A as an example for description.

If difference data between capacitance data corresponding to a touch sensor and reference data is greater than or equal to a preset value, it may indicate that a location that is of the curved screen and that corresponds to the touch sensor is touched, that is, the mobile phone detects a touch operation of the user.

303: If the region on the side edge of the curved screen is not touched, the mobile phone determines that a current mode is not a one-hand holding mode.

If there is no touch sensor whose difference data is greater than or equal to the preset value in the region on the side edge of the curved screen, the mobile phone may determine that the region on the side edge of the curved screen is not touched.

304: If the region on the side edge of the curved screen is touched, the mobile phone may be in a one-hand holding mode, and then perform step 305.

If there is a touch sensor whose difference data is greater than or equal to the preset value in the region on the side edge of the curved screen, the mobile phone may determine that the region on the side edge of the curved screen is touched, that is, the mobile phone detects a touch operation performed by the user on the region on the side edge.

If the region on the side edge of the curved screen is touched, there may be a holding operation, that is, the mobile phone may be currently in a one-hand holding mode. Therefore, the mobile phone may perform step 305, to determine, based on touch information corresponding to the touch data, whether the mobile phone is currently in the one-hand holding mode, and determine a target region in the one-hand holding mode. The touch information includes one or more of a quantity of contact regions of the user on the side edge, a relative location of the contact region, an area of the contact region, or a contact semaphore.

305: The mobile phone determines the target region based on the touch information.

The mobile phone may determine a location of the target region in a plurality of solutions. The following uses examples for description.

Solution 1: The mobile phone determines the target region based on a preset algorithm model. The mobile phone may input touch information corresponding to current touch data to the algorithm model. An output of the algorithm model includes first information or second information. The first information includes location information of the target region, and the second information indicates that a current mode is not a one-hand holding mode and the target region does not exist.

In some embodiments, the algorithm model is a first matching model, and the mobile phone may input current touch information to the first matching model. In some technical solutions, if the first matching model outputs the location information of the target region, it may indicate that a current mode is a one-hand holding mode, and the target region is one of contact regions of a hand of the user on the side edge in the one-hand holding mode. For example, the location information that is of the target region and that is output by the first matching model is a coordinate range of the target region. If the first matching model does not output the location information of the target region, it may indicate that a current mode is not a one-hand holding mode and the target region does not exist. In this case, the mobile phone returns to step 301.

For example, the target region may be an uppermost contact region on the side edge, or may be a contact region with a largest area on the side edge.

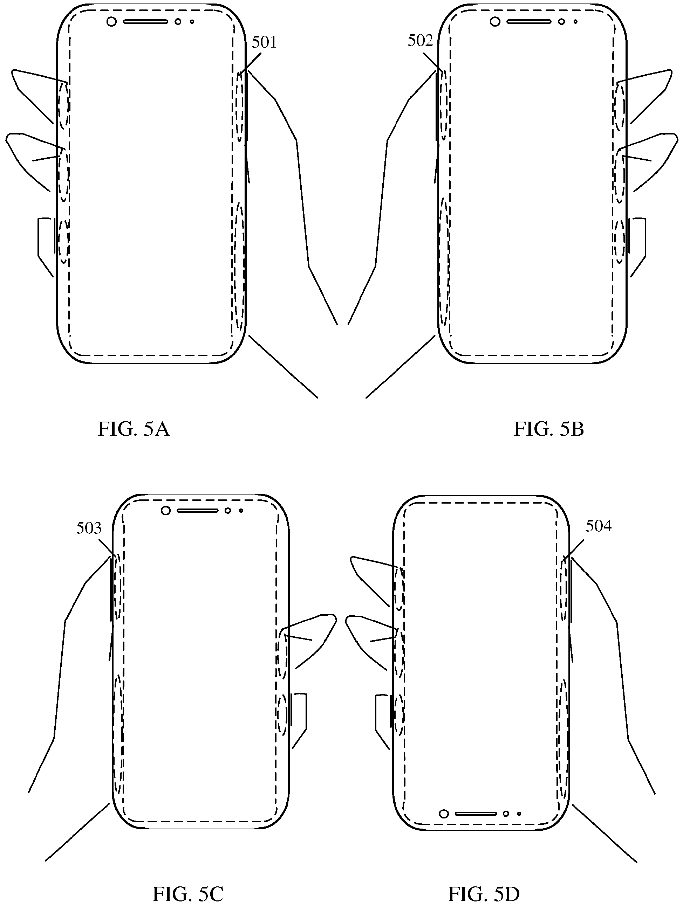

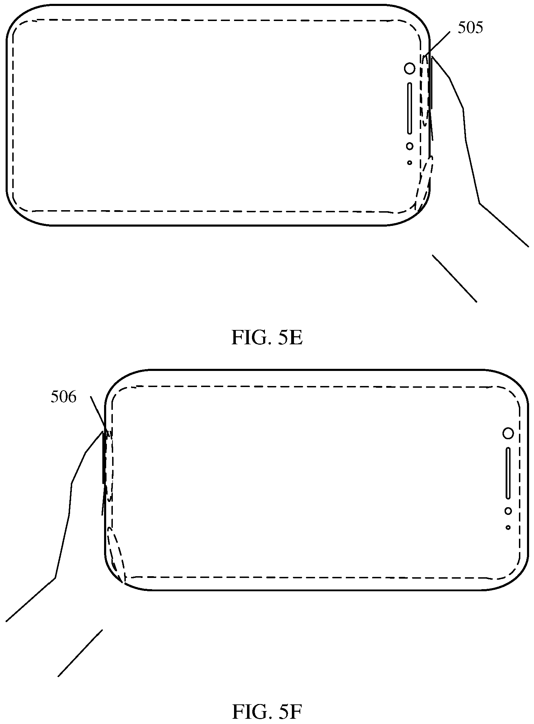

For another example, the target region is a contact region of the thumb of the user on the side edge in a one-hand holding mode. In this way, the user can subsequently and conveniently perform a touch operation on the target region on the side edge by using the thumb, to replace an operation in a middle region of the curved screen. For example, after touch information corresponding to a holding posture shown in FIG. 5A is input to the first matching model, the location information of the target region that is output by the first matching model is location information of a contact region 501, and the target region is the contact region 501. After touch information corresponding to a holding posture shown in FIG. 5C is input to the first matching model, the location information of the target region that is output by the first matching model is location information of a contact region 503, and the target region is the contact region 503. After touch information corresponding to a holding posture shown in FIG. 5E is input to the first matching model, the location information of the target region that is output by the first matching model is location information of a contact region 505, and the target region is the contact region 505.

In some embodiments, the first information may further include a holding mode. If the first matching model outputs information about a left-hand holding mode and the location information of the target region, it may indicate that a current mode is the left-hand holding mode, and the target region is one of contact regions of a hand on the side edge in the left-hand holding mode. Alternatively, if the first matching model outputs information about a right-hand holding mode and the location information of the target region, it may indicate that a current mode is the right-hand holding mode, and the target region is one of contact regions of a hand on the side edge in the right-hand holding mode. If the first matching model does not output the location information of the target region, it may indicate that a current mode is not a one-hand holding mode and the target region does not exist. In this case, the mobile phone returns to step 301.

It should be noted that, with continuous use of the user, the mobile phone may continuously modify the first matching model based on touch information obtained each time the mobile phone is held with one hand, so that the first matching model is more consistent with a hand feature, a holding posture, a holding habit, or the like of the user. Therefore, the holding mode and the target region that are subsequently identified based on the modified first matching model are more accurate.

In some other embodiments, the algorithm model includes a second matching model and a third matching model, and the mobile phone may separately input touch information corresponding to current touch data to the second matching model and the third matching model. The second matching model may be referred to as a left-hand matching model, and the third matching model may be referred to as a right-hand matching model. If the second matching model outputs the location information of the target region, it may indicate that a current mode is a left-hand holding mode, and the target region is one of contact regions of a hand on the side edge in the left-hand holding mode. If the third matching model outputs the location information of the target region, it may indicate that a current mode is a right-hand holding mode, and the target region is one of contact regions of a hand on the side edge in the right-hand holding mode. If neither the second matching model nor the third matching model outputs the location information of the target region, it may indicate that a current mode is not a one-hand holding mode and the target region does not exist. In this case, the mobile phone returns to step 301.

For example, after touch information corresponding to a holding posture shown in FIG. 5A is input to the second matching model and the third matching model, the third matching model outputs information about the right-hand holding mode and the location information of the target region, that is, location information of a contact region 501. After touch information corresponding to a holding posture shown in FIG. 5B is input to the second matching model and the third matching model, the second matching model outputs information about the left-hand holding mode and the location information of the target region, that is, location information of a contact region 502.

Similarly, with continuous use of the user, the mobile phone may continuously modify the second matching model and the second matching model based on touch information obtained each time the mobile phone is held with one hand, so that the second matching model and the third matching model are more consistent with a hand feature, a holding posture, a holding habit, or the like of the user. Therefore, the holding mode and the target region that are subsequently identified based on the modified second matching model and third matching model are more accurate.

In some other embodiments, an input parameter of the foregoing algorithm model (including the first matching model, the second matching model, and the third matching model) may further include gyroscope data, and the gyroscope data may indicate a current posture of the mobile phone, which may also be referred to as a placement status. For example, the placement status includes a portrait mode, a landscape mode, or the like. The portrait mode includes an upside-up state in which a front-facing camera is located above, an upside-down state in which the front-facing camera is located below, or the like. The landscape mode includes a state in which a front-facing camera is located on the left, a state in which the front-facing camera is located on the right, or the like. When the mobile phone is in different placement statuses, locations of target regions on side edges of the mobile phone are different. The algorithm model may output the locations of the target regions in the different placement statuses based on the touch information and the gyroscope data.

For example, after touch information and gyroscope data corresponding to a holding posture shown in FIG. 5A are input to the first matching model, the first matching model outputs location information that is of the target region and that corresponds to an upside-up state in a portrait mode, that is, location information of a contact region 501. After touch information and gyroscope data corresponding to a holding posture shown in FIG. 5D are input to the first matching model, the first matching model outputs location information that is of the target region and that corresponds to an upside-down state in a portrait mode, that is, location information of a contact region 504.

In another example, after touch information and gyroscope data corresponding to a holding posture shown in FIG. 5E are input to the first matching model, the first matching model outputs location information of the target region in a scenario in which a front-facing camera is located on the left in a landscape mode, that is, location information of a contact region 505. After touch information and gyroscope data corresponding to a holding posture shown in FIG. 5F are input to the first matching model, the first matching model outputs location information of the target region in a scenario in which a front-facing camera is located on the right in a landscape mode, that is, location information of a contact region 506.

Solution 2: The mobile phone determines the one-hand holding mode and the target region based on the touch information.

A periphery of the mobile phone may include four side edges, that is, a first side edge, a second side edge, a third side edge, and a fourth side edge. The first side edge, the second side edge, the third side edge, and the fourth side edge may be predefined side edges.

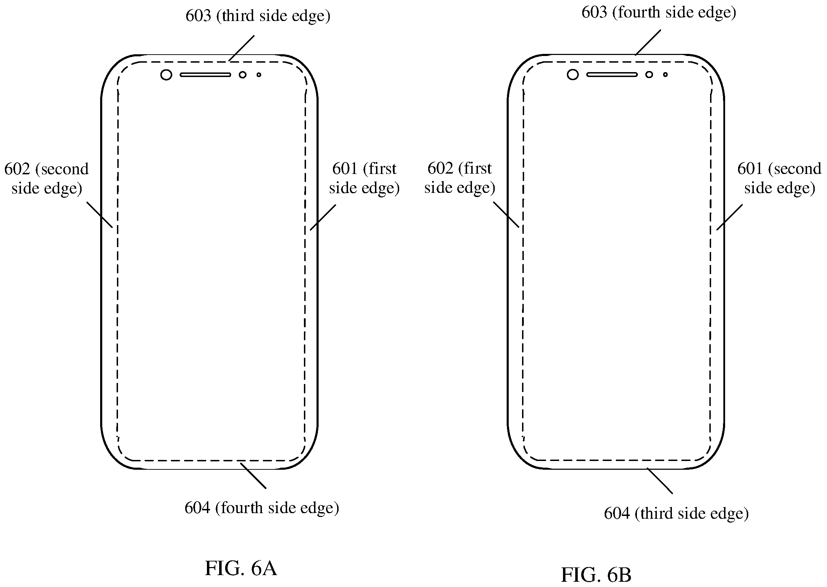

For example, refer to FIG. 6A. The first side edge is a side edge 601, the second side edge is a side edge 602 opposite to the first side edge, the third side edge is a side edge 603 of a side on which a front-facing camera is located, and the fourth side edge is a side edge 604 opposite to the third side edge.

For another example, refer to FIG. 6B. The first side edge is a side edge 602, the second side edge is a side edge 601 opposite to the first side edge, the fourth side edge is a side edge 603 of a side on which a front-facing camera is located, and the fourth side edge is a side edge 604 opposite to the third side edge.

The following uses definitions of the side edges shown in FIG. 6A as an example to describe a process in which the mobile phone determines a location of the target region based on touch information corresponding to current touch data.

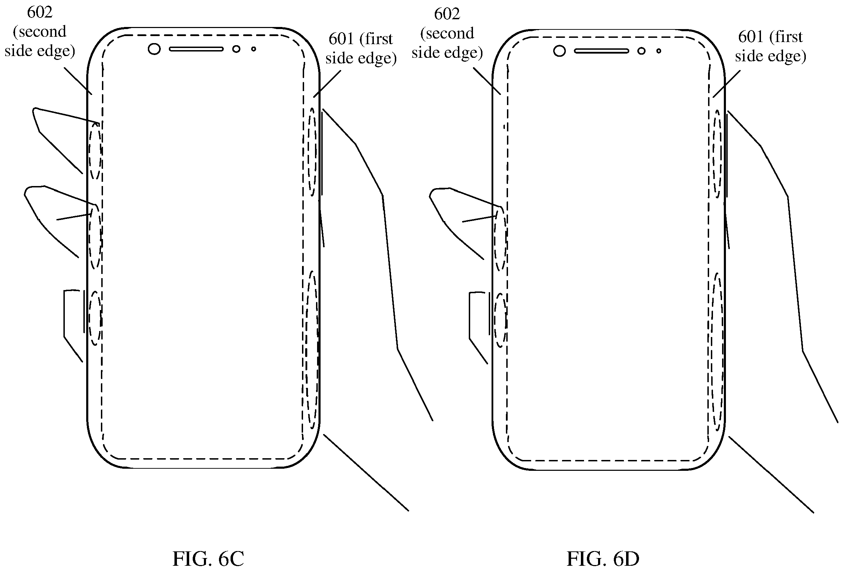

For example, the mobile phone includes a top and a bottom, the top is a side on which a front-facing camera is located, and the bottom is a side opposite to the top. When a user faces a curved screen, the top faces upward, and the user holds the mobile phone with the right hand, based on a holding habit of most people, if the user tightly holds the mobile phone, refer to FIG. 6C, the thumb and the thenar of the right hand of the user are usually in contact with the first side edge 601 of the mobile phone shown in FIG. 6A, that is, there are two contact regions of the hand of the user on the first side edge, that is, a contact region of the thumb and a contact region of the thenar.

In some embodiments, based on a holding habit of most people, when the user holds the mobile phone, refer to FIG. 6C, the index finger of the user is usually located on the back of the mobile phone, and the middle finger, the ring finger, and the little finger of the user are usually in contact with the second side edge 602, that is, there are three contact regions on the second side edge 602. Therefore, if the mobile phone detects that there are two contact regions on the first side edge, and there are three contact regions on the second side edge, the mobile phone may determine that a current mode is a one-hand holding mode.

In some embodiments, after determining the one-hand holding mode, the mobile phone may further prompt, in a manner such as displaying prompt information or playing a sound in a middle region of the curved screen, the user that the mobile phone has currently entered the one-hand holding mode.

The target region is one of contact regions of the hand of the user on the side edge in the one-hand holding mode. The mobile phone may further determine the location of the target region based on the touch information. For example, the mobile phone may determine, based on the touch information, that a contact region that is on a side edge and that is on the top is the target region, or determine that a contact region with a largest area is the target region. For another example, the target region is a contact region of the thumb of the user on the side edge in the one-hand holding mode. The mobile phone may determine that the first side edge including two contact regions is a side edge on which the thumb is located, and that the second side edge including three contact regions is a side edge on which the middle finger, the ring finger, and the little finger are located. Usually, a contact area between the thumb and the side edge is smaller than a contact area between the thenar and the side edge. Therefore, in a technical solution, the mobile phone determines a contact region with a smaller area on the first side edge as the contact region of the thumb, that is, the target region. In another technical solution, a contact region with a largest area on the second side edge is the contact region of the middle finger, and the mobile phone determines that a contact region that is on the first side edge and that is close to the contact region of the middle finger is the contact region of the thumb. In another technical solution, the mobile phone determines a posture of the mobile phone based on gyroscope data, and determines that a contact region that is on the first side edge of the mobile phone and that is close to the top is the contact region of the thumb, that is, the target region.

In some other embodiments, based on a holding habit of some people, when the user holds the mobile phone, refer to FIG. 6D, the thumb and the thenar of the right hand of the user are usually in contact with the first side edge 601 of the mobile phone shown in FIG. 6A, the index finger and the middle finger of the user are located on the back of the mobile phone, and the ring finger and the little finger of the user are in contact with the second side edge 602, that is, there are also two contact regions on the second side edge 602. Therefore, if the mobile phone detects that there are two contact regions on each of the first side edge and the second side edge, the mobile phone may determine that a current mode is a one-hand holding mode, and the target region is one of contact regions of the hand of the user on the side edge in the one-hand holding mode.

For example, the target region is a contact region of the thumb of the user on the side edge in the one-hand holding mode. The mobile phone may further determine the location of the target region based on the touch information. Usually, a contact area between the mobile phone and each of the thumb and the thenar is larger than a contact area between the mobile phone and each of the ring finger and the little finger. Therefore, if the mobile phone determines that a contact area of the first side edge is larger than a contact area of the second side edge, the mobile phone may determine that the thumb is in contact with the first side edge. Usually, a contact area between the thumb and the side edge is smaller than a contact area between the thenar and the side edge. Therefore, in a technical solution, the mobile phone determines a contact region with a smaller area on the first side edge as the contact region of the thumb, that is, the target region. In another technical solution, a contact region with a smaller area on the second side edge is the contact region of the little finger, and the mobile phone determines that a contact region that is on the first side edge and that is away from the contact region of the little finger is the contact region of the thumb. In another technical solution, the mobile phone determines a posture of the mobile phone based on gyroscope data, and determines that a contact region that is on the first side edge of the mobile phone and that is close to the top is the contact region of the thumb, that is, the target region.

In some other embodiments, if a size of the curved screen is large, when a user holds the mobile phone, the thumb and the thenar of the right hand of the user are usually in contact with the first side edge 601 of the mobile phone shown in FIG. 6A, and other fingers of the user are usually located on the back of the mobile phone, that is, there is no contact region on the second side edge. It may be understood that, in addition to a manner in which the hand touches the curved screen, the foregoing difference data may also be generated when another part such as an arm or another object such as a glove, clothes, or a pocket touches the curved screen. In addition, difference data corresponding to different scenarios (for example, a holding scenario and a non-holding scenario) and cases in which different objects touch the curved screen is different, that is, contact semaphores are different. The mobile phone may determine, based on a value of a contact semaphore, whether the curved screen is touched by the finger, to avoid misidentification caused by another scenario (that is, the non-holding scenario) or a case in which another object such as clothes touches the curved screen. For example, when other fingers hold the back of the mobile phone, if another object touches a side edge of the mobile phone, it is likely to mistakenly determine that the mobile phone is in a one-hand holding mode. The mobile phone may determine, by using the contact semaphore, whether a finger touches the side edge or another object touches the side edge, to more accurately determine whether the mobile phone is the one-hand holding mode. Therefore, if the mobile phone detects that there are two contact regions of the hand on the first side edge, and there is no contact region on the second side edge, the mobile phone may determine that a current mode is a one-hand holding mode, and the target region is one of contact regions of the hand of the user on the side edge in the one-hand holding mode. When the target region is a contact region of the thumb of the user on the side edge in the one-hand holding mode, the mobile phone may further determine the location of the target region based on the touch information. For example, a contact region that is on the first side edge of the mobile phone and that is close to the top is the contact region of the thumb, that is, the target region.

In another example, when the user faces the curved screen, a front-facing camera is located on the top of the curved screen, and the user holds the mobile phone with the right hand, based on a holding habit of some people, if the user loosely holds the mobile phone, the thumb of the right hand of the user is usually in contact with the first side edge of the mobile phone shown in FIG. 6A, the thenar is not in contact with the mobile phone, other fingers are not in contact with the second side edge, and the palm is in contact with the back of the mobile phone to hold the mobile phone. Therefore, if the mobile phone detects that there is one contact region of the hand on the first side edge, and there is no contact region on the second side edge, the mobile phone may determine that a current mode is a one-hand holding mode, and the target region is a contact region of the hand of the user on the side edge in the one-hand holding mode. The target region is the contact region of the thumb.

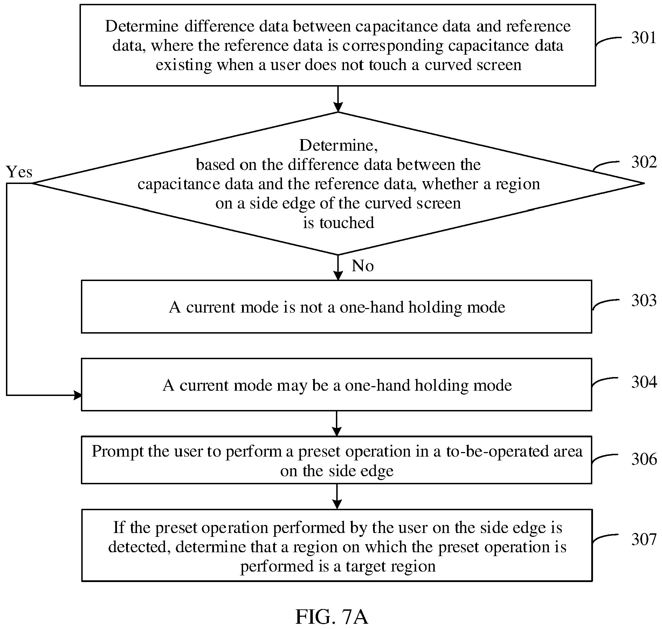

Refer to FIG. 7A. In some other embodiments, after step 304, as an alternative to step 305, the method may further include the following steps.

306: The mobile phone prompts the user to perform a preset operation in a to-be-operated region on the side edge.

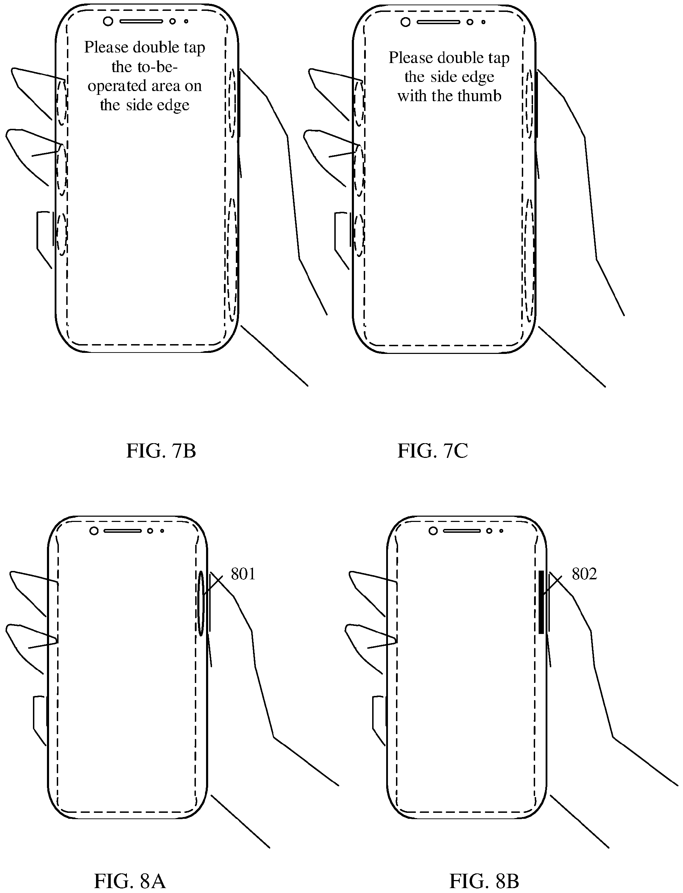

If a region on the side edge of the curved screen is touched, the mobile phone may be in a one-hand holding mode, and the mobile phone may prompt the user to perform the preset operation in the to-be-operated region on the side edge, where the to-be-operated region is the target region, so that the mobile phone determines the location of the target region based on the preset operation of the user. For example, the preset operation may be a double-tap operation, a touch and hold operation, a single-tap operation, a slide operation, or the like. For example, refer to FIG. 7B. The mobile phone may prompt the user with "Please double tap the to-be-operated region on the side edge". For another example, the mobile phone may prompt the user with "Please tap the target region", to subsequently control a middle region of the screen by using the target region.

In some embodiments, to facilitate a user operation, the target region may be a contact region of the thumb when the mobile phone is held with one hand. In this case, refer to FIG. 7C. The mobile phone may prompt the user with "Please double tap the side edge with the thumb".

That is, in this solution, the mobile phone may prompt the user to actively set the to-be-operated target region through the preset operation.

307: If the mobile phone detects the preset operation performed by the user on the side edge, the mobile phone determines that a region on which the preset operation is performed is the target region.

If the user really expects to control the mobile phone by performing an operation on the target region instead of an operation in the middle region of the curved screen, the user may perform the preset operation in the target region that expects to be operated on the side edge. The region on which the preset operation is performed is a contact region of a finger on the side edge when the user performs the preset operation. When the preset operation is a double-tap operation, contact regions of the finger on the side edge that are obtained when the user taps the side edge twice may be different, and the target region may be a union set of the contact regions of the finger on the side edge that are obtained when the user taps the side edge twice.

In some embodiments, the preset operation has specific timeliness. If the mobile phone detects, within preset duration after the mobile phone prompts the user to perform the preset operation in the target region, the preset operation performed by the user on the side edge, the mobile phone determines that the region on which the preset operation is performed is the target region. After the preset duration expires, the mobile phone no longer detects the preset operation and no longer determines the target region.

Refer to FIG. 2. After step 202, the method may further include the following steps.

203: The mobile phone prompts the user with the location of the target region.

In some embodiments, after determining the target region, the mobile phone may prompt the user with the target region, so that the user performs a touch operation on the target region, to control the mobile phone through the touch operation.

In some embodiments, after determining the target region, the mobile phone may lock the target region, and prompt the user with the target region, so that the user performs a touch operation on the target region, to control the mobile phone through the touch operation.

In some other embodiments, after determining the target region, if the mobile phone detects that a finger of the user leaves the target region, the mobile phone locks the target region, and prompts the user with the target region. Specifically, the mobile phone may determine, based on difference data between capacitance data of the target region and reference data, that the finger leaves the side edge of the mobile phone.

For example, the target region is a contact region of the thumb. After detecting an operation that the user lifts the thumb and the thumb releases the target region on the mobile phone, the mobile phone locks the target region.

The mobile phone may prompt the user with the target region through display, a sound, vibration, an indicator, or the like.

For example, refer to FIG. 2. Step 203 may include the following steps.

203-1: The mobile phone displays a prompt mark in the target region on the side edge of the curved screen.

For example, when the target region is the region 501 shown in FIG. 5A, as shown in FIG. 8A, the prompt mark may be an elliptical mark 801; as shown in FIG. 8B, the prompt mark may be a rectangular mark 802; or the prompt mark may be a button pattern, or the like. A specific type of the prompt mark is not limited in this embodiment of this application.

For another example, the mobile phone may display a prompt mark in the target region on the side edge of the curved screen, and prompt the user through vibration. In some embodiments, the target region is a contact region of the thumb, and a motor configured to provide a vibration prompt may be disposed in a region that is frequently touched by the thumb on the side edge of the curved screen, to conveniently prompt the user near the target region through vibration. For another example, a color of the target region is different from that of another region. For another example, a color of the target region is a preset color (for example, black).

In some embodiments, manners of prompting the location of the target region are different in different application scenarios. For example, in some application scenarios, the mobile phone prompts the location by displaying an elliptical mark, and in other application scenarios, the mobile phone prompts the location through vibration. In some other embodiments, the mobile phone prompts the user with the location of the target region in a same prompt manner.

204: The mobile phone detects a touch operation performed by the user on the target region.

When the user holds the mobile phone with one hand, a finger of the user is naturally located on the side edge of the mobile phone, the finger of the user may conveniently and naturally perform a touch operation on the target region on the side edge of the mobile phone, to control the mobile phone, and in the one-hand holding mode, the finger does not need to specially reach the middle region of the curved screen to perform the touch operation.

The mobile phone may detect, by using a touch sensor, a touch operation performed by the user on the target region on the side edge. For example, the touch operation performed by the user on the target region may be a single-tap operation, a double-tap operation, a touch and hold operation, a slide operation, or a pressure press operation. The pressure press operation is an operation whose press strength is greater than a preset pressure threshold. The slide operation performed by the user on the target region is a slide operation performed by the user on the target region on a plane on which the target region is located, that is, a slide operation performed by the user on the target region on a plane on which the side edge is located.

When the target region is a contact region of the thumb, the touch operation performed by the user on the target region is also usually a touch operation performed by the thumb on the target region.

205: The mobile phone performs a corresponding response operation for the touch operation.

After detecting the touch operation performed by the user on the target region, the mobile phone may perform the corresponding response operation for the touch operation, to perform response processing. For example, in response to the touch operation performed by the user on the target region, the mobile phone may perform an operation of selecting a selection option/a control/a parameter, an operation of switching the selected selection option/control/parameter, or an operation of adjusting a value of the parameter. When the target region is a contact region of the thumb, the mobile phone performs a corresponding response operation for a touch operation performed by the thumb on the target region.

Specifically, the mobile phone may determine a current real-time application scenario, to perform response processing for a touch operation based on the real-time application scenario. For example, the mobile phone may determine a corresponding real-time application scenario based on an application running in the foreground or a currently displayed interface, to perform response processing for a touch operation based on the application scenario. For example, if applications currently running in the foreground of the mobile phone are different, current application scenarios of the mobile phone are also different. For example, if an application running in the foreground of the mobile phone is a social application, the mobile phone may determine that a current scenario is a social application scenario. If an application running in the foreground of the mobile phone is a camera application, the mobile phone may determine that a current scenario is a photographing scenario. If an application running in the foreground of the mobile phone is a video application, the mobile phone may determine that a current scenario is a video application scenario. If an application running in the foreground of the mobile phone is an e-book reader, the mobile phone may determine that a current scenario is an e-book application scenario.

For another example, if the mobile phone determines that a current interface is an interface of a video application, the mobile phone may determine that a current scenario is a video application scenario. If the mobile phone determines that a current interface is a video playing interface, the mobile phone may determine that a current scenario is a video playing scenario. The video application scenario may include the video playing scenario. For another example, if the mobile phone determines that a current interface is an e-book page, the mobile phone may determine that a current scenario is an e-book reading scenario. The e-book application scenario may include the e-book reading scenario.

The mobile phone may perform response processing for the touch operation based on a current application scenario. For example, if the current application scenario is a photographing scenario, and the touch operation performed by the user on the target region is a slide operation, response processing performed by the mobile phone for the slide operation may be switching a control selected in a photographing preview interface. For another example, if the current application scenario is an e-book reading scenario, and the touch operation performed by the user on the target region is a slide operation, response processing performed by the mobile phone for the slide operation may be turning a page.

To be specific, in a one-hand holding mode, the user may control the mobile phone by performing a touch operation on the target region, to replace a touch operation performed by the user in the middle region of the curved screen, that is, the finger does not need to reach the middle region of the curved screen to perform the operation. Therefore, an operation amplitude of the finger can be shortened, and user experience can be improved.

In the touch operation method described in the foregoing embodiments, the mobile phone may identify the target region in the one-hand holding mode, where the target region is one of contact regions of fingers of the user on the side edge during holding. The mobile phone performs response processing for the touch operation performed by the user on the target region, to replace a touch operation performed by the user in the middle region of the curved screen. When the user holds the mobile phone with one hand, the finger of the user is naturally located on the side edge of the mobile phone, the finger of the user may conveniently and naturally perform the touch operation on the side edge of the mobile phone, and the finger of the user does not need to deliberately reach a control in the middle region of the curved screen to perform an operation. Therefore, the user can conveniently and naturally perform a one-hand operation, a one-hand shortcut operation manner is added, and user experience is improved.

Particularly, when the user holds the mobile phone with one hand, the thumb of the user is naturally located on the side edge of the mobile phone. When the target region is a contact region of the thumb on the side edge, the thumb may perform the touch operation on the side edge of the mobile phone more flexibly, conveniently, and naturally, and the finger of the user does not need to deliberately reach a control in the middle region of the curved screen to perform an operation. Therefore, the user can conveniently and naturally perform a one-hand operation, a one-hand shortcut operation manner is added, and user experience is improved.

For example, in a scenario in which a one-hand operation is usually required, such as taking a selfie, carrying things, or taking a bus or a subway, the method provided in embodiments of this application can facilitate the one-hand operation of the user, so that user experience is better.

In embodiments of this application, the mobile phone may store a mapping relationship between a touch operation performed by the user on the target region and a response operation. After detecting the touch operation performed by the user on the target region, the mobile phone may perform response processing based on the response operation corresponding to the touch operation in the mapping relationship.

In some embodiments, the mapping relationship stored in the mobile phone may be a system-level mapping relationship, and the system-level mapping relationship is applicable to various applications of the mobile phone, including a system application and a third-party application. Each application may also select whether to use the mapping relationship to perform response processing for the touch operation perform by the user on the target region.

For example, for the system-level mapping relationship, refer to Table 1.

**Table 1**

| Mapping relationship | |
|---|---|
| Touch operation | Response operation |
| Double tap in a target region | Switch a selected selection option/control/parameter in an interface |
| Single tap in the target region | Single tap the selected selection option/control |
| Touch and hold in the target region | Touch and hold the selected selection option/control |
| Slide left/right in the target region | Slide left/right in a middle region of a curved screen |
| Slide up/down in the target region | Slide up/down in the middle region of the curved screen |

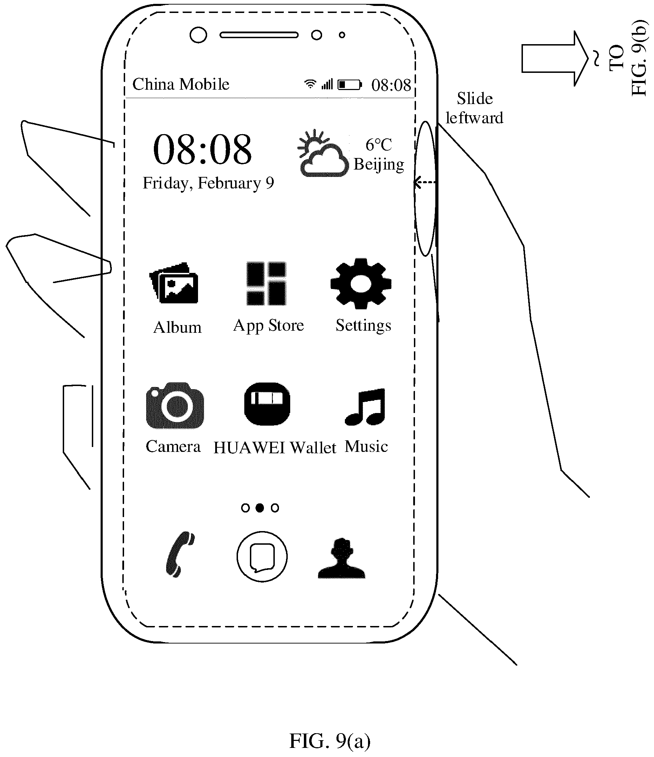

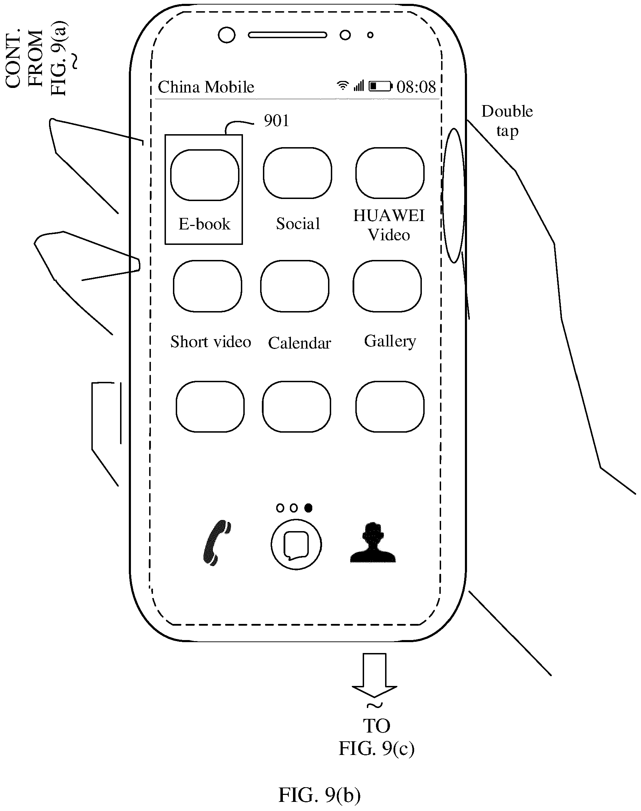

For example, refer to FIG. 9(a). A current application scenario is a home screen scenario. Based on the mapping relationship shown in Table 1, if the mobile phone detects that the touch operation performed by the user on the target region is a slide left operation on a plane on which the target region is located, the mobile phone determines, based on the mapping relationship, that a corresponding response operation is a slide left operation performed by the user in a middle region of a curved screen. Therefore, as shown in FIG. 9(b), in response to the slide left operation performed by the user in the middle region of the curved screen, the mobile phone moves a current page of a home screen to the left and switches to another page on which a home screen is displayed.

In some embodiments, the mobile phone selects a preset control after switching to a home screen on the right side for display. The preset control is displayed differently from another control. For example, the control is highlighted, the control is frame-selected, or a tick is displayed on the control. The preset control may be a control specified in advance, or may be a control at a preset location (for example, a control in an upper left corner or a control in an upper right corner). For example, the preset control is a control 901 shown in FIG. 9(b).

In some other embodiments, after the mobile phone switches to a home screen on the right side for display, the mobile phone temporarily does not select a control on the home screen, and after detecting a double-tap operation performed by the user on the target region, the mobile phone selects a preset control.

For example, based on the mapping relationship shown in Table 1, after detecting a double-tap operation performed by the user on the target region, the mobile phone may switch a selected control in an order from left to right first and then from top to bottom. After detecting a single-tap operation performed by the user on the target region, the mobile phone determines that a response operation is a single-tap operation performed on a currently selected icon on a home screen, to open an application corresponding to the icon.

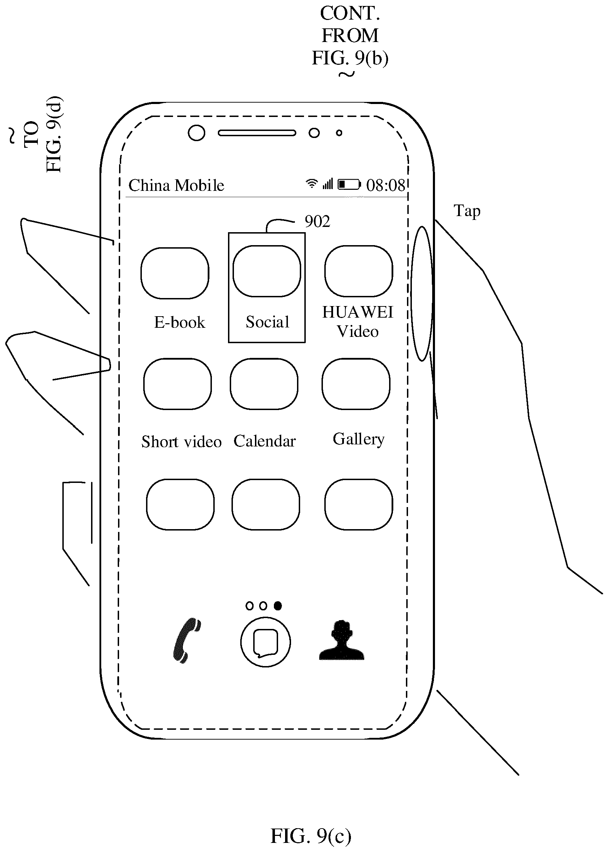

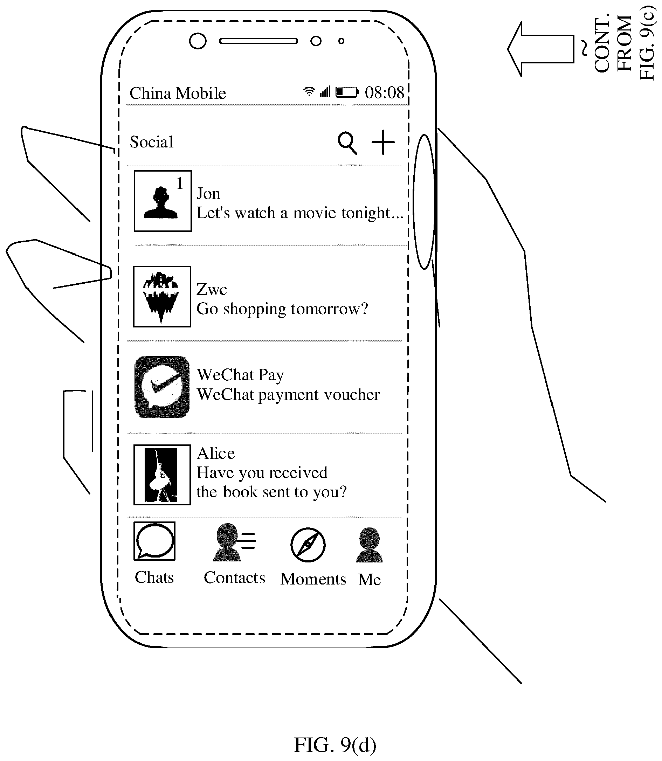

For example, when the control 901 shown in FIG. 9(b) is selected, if the mobile phone detects a double-tap operation performed by the user on the target region, as shown in FIG. 9(c), the mobile phone selects a next control 902. When the control 902 shown in FIG. 9(c) is selected, if the mobile phone detects a single-tap operation performed by the user on the target region, as shown in FIG. 9(d), the mobile phone opens a social application corresponding to the control 902 and displays an interface of the social application.

Based on the mapping relationship shown in Table 1, after detecting a touch and hold operation performed by the user on the target region, the mobile phone performs the touch and hold operation on a currently selected icon on a home screen, to display an icon editing interface.

For another example, based on the mapping relationship shown in Table 1, if a current application scenario is a scenario in which a picture in a gallery is browsed, and the mobile phone detects a slide left operation performed by the user in the target region, the mobile phone determines that a corresponding response operation is a slide left operation performed by the user in the middle region of the curved screen, to switch to a next picture.

For another example, based on the mapping relationship shown in Table 1, if a current application scenario is a scenario in which a web page is browsed through a browser, and the mobile phone detects a slide up operation performed by the user in the target region, the mobile phone determines that a corresponding response operation is a slide up operation performed by the user in the middle region of the curved screen, to slide up page content of the web page.

It may be understood that the mapping relationship shown in Table 1 is merely an example for describing the system-level mapping relationship. The system-level mapping relationship may alternatively be another mapping relationship. This is not limited in embodiments of this application.

In some other embodiments, the mapping relationship stored in the mobile phone includes a system-level mapping relationship and an application-level mapping relationship corresponding to a third-party application. The system-level mapping relationship is applicable to a system application. For example, the application relationship shown in Table 1 is applicable to a system application such as a home screen, a camera, or settings. Each application-level mapping relationship is applicable to a corresponding third-party application, and different third-party applications may correspond to different mapping relationships.

For example, for a mapping relationship corresponding to an e-book reader, refer to Table 2.

**Table 2**

| Mapping relationship | |
|---|---|
| Touch operation | Response operation |
| Single tap in a target region | Display a reading menu |
| Touch and hold in the target region | Select a piece of text in the middle of a curved screen |
| Slide left/right in the target region | Page backward/forward |
| Slide up/down in the target region | Page up/down |

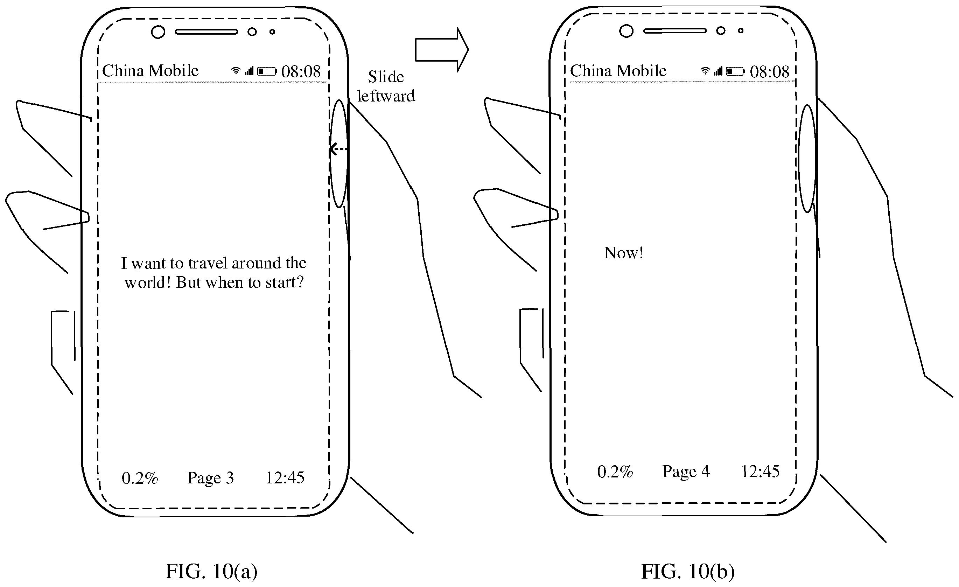

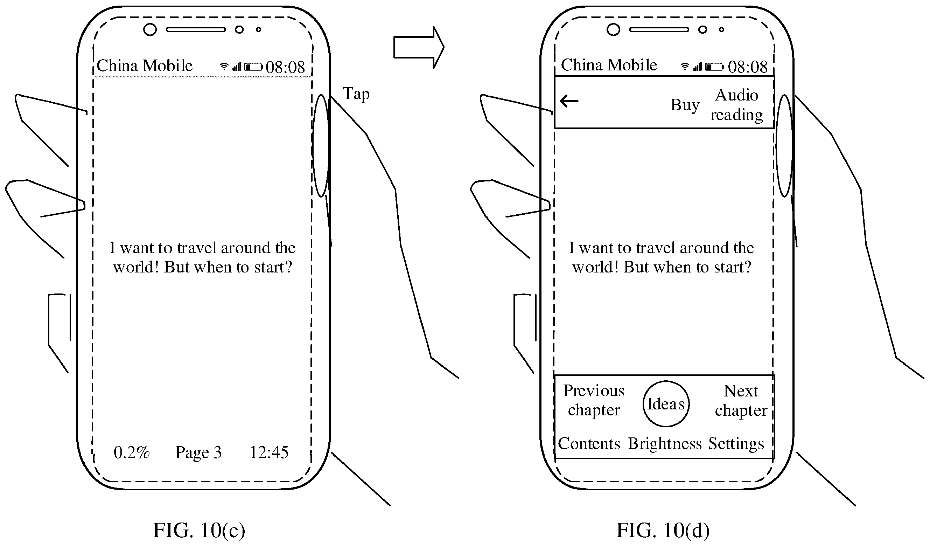

For example, refer to FIG. 10(a). A current application scenario is an e-book reading scenario. Based on the mapping relationship shown in Table 2, if the mobile phone detects a slide left operation performed by the user in the target region, the mobile phone determines that a corresponding response operation is a page backward operation performed by the user in the middle region of the curved screen. Therefore, as shown in FIG. 10(b), the mobile phone turns to a next page. As shown in FIG. 10(c), if the mobile phone detects a single-tap operation performed by the user in the target region, the mobile phone determines that a corresponding response operation is an operation of displaying a reading menu, to display a reading menu interface shown in FIG. 10(d).

For another example, for a mapping relationship corresponding to a camera application, refer to Table 3.

**Table 3**

| Mapping relationship | |
|---|---|
| Touch operation | Response operation |
| Single tap in a target region | Select a selection option/a control/a parameter |
| Slide left/right in the target region | Switch the selected selection option/control/parameter |
| Slide up/down in the target region | Increase or decrease a value of the selected parameter |
| Double tap in the target region | Quickly take a photo |

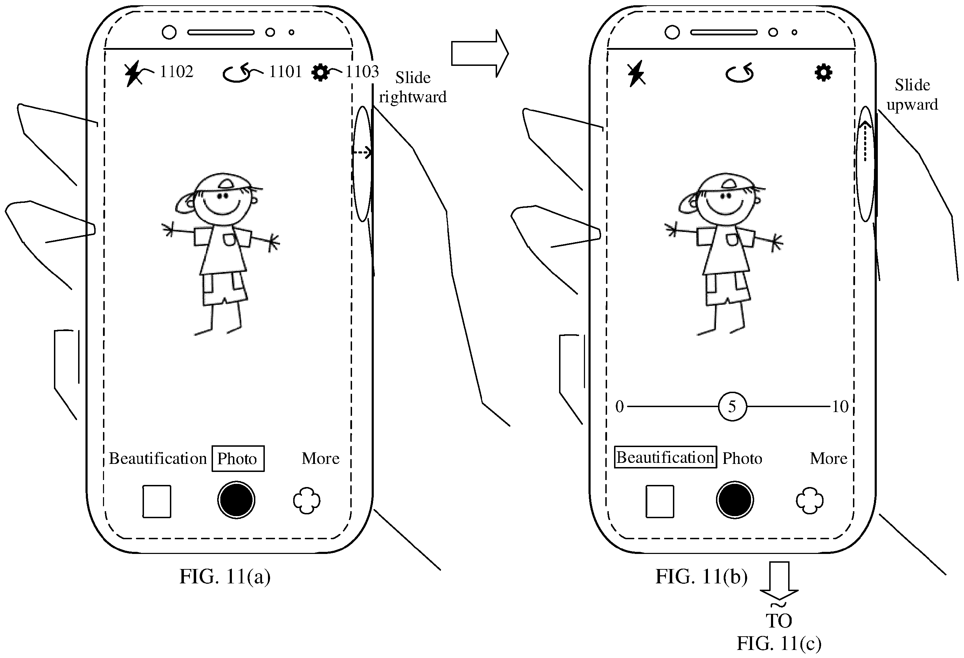

For example, refer to FIG. 11(a). A current application scenario is a photographing scenario, and the mobile phone may select a photographing mode by default. Based on the mapping relationship shown in Table 3, if the mobile phone detects a slide left/right operation performed by the user in the target region, the mobile phone determines that a corresponding response operation is an operation of switching a selected selection option/control/parameter. For example, when detecting the slide left/right operation performed by the user in the target region, the mobile phone may first switch between selection options/controls/parameters included in the photographing mode. For example, the photographing mode may include a portrait mode, a beautification mode, a photo mode, a night mode, a video mode, a professional mode, or a time-lapse mode. It should be noted that the mobile phone may not only select or switch the photographing mode, but also select another control, for example, select a front/rear switching control 1101, a flash control 1102, or a setting control 1103.

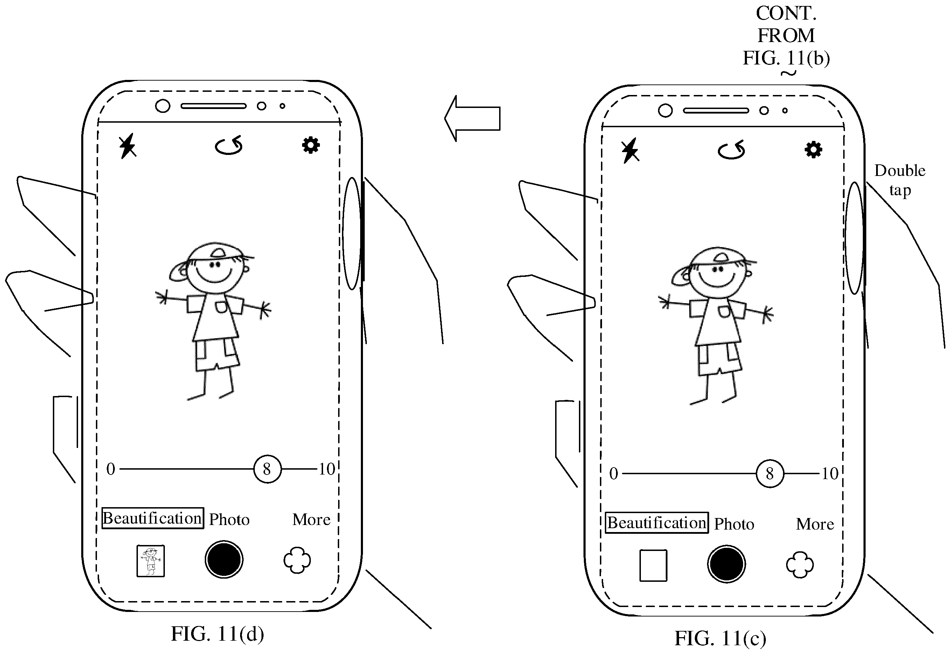

For example, as shown in FIG. 11(a), if the mobile phone detects a slide left operation performed by the user in the target region, as shown in FIG. 11(b), the mobile phone selects a beautification mode and displays a photographing interface in the beautification mode. In the beautification mode, if the mobile phone detects a slide up operation performed by the user in the target region, the mobile phone determines that a corresponding response operation is an operation of increasing a value of a parameter. Therefore, as shown in FIG. 11(c), the mobile phone increases a beautification level.

As shown in FIG. 11(c), if the mobile phone detects a double-tap operation performed by the user in the target region, the mobile phone determines that a corresponding response operation is an operation of quickly taking a photo. Therefore, as shown in FIG. 11(d), the mobile phone takes a photo.

For another example, for a mapping relationship corresponding to a short video application, refer to Table 4.

**Table 4**

| Mapping relationship | |
|---|---|
| Touch operation | Response operation |
| Single tap in a target region | Select |
| Slide left/right in the target region | Switch a selected selection option/control/parameter |
| Slide up/down in the target region | Switch a short video |
| Double tap in the target region | Play/pause |

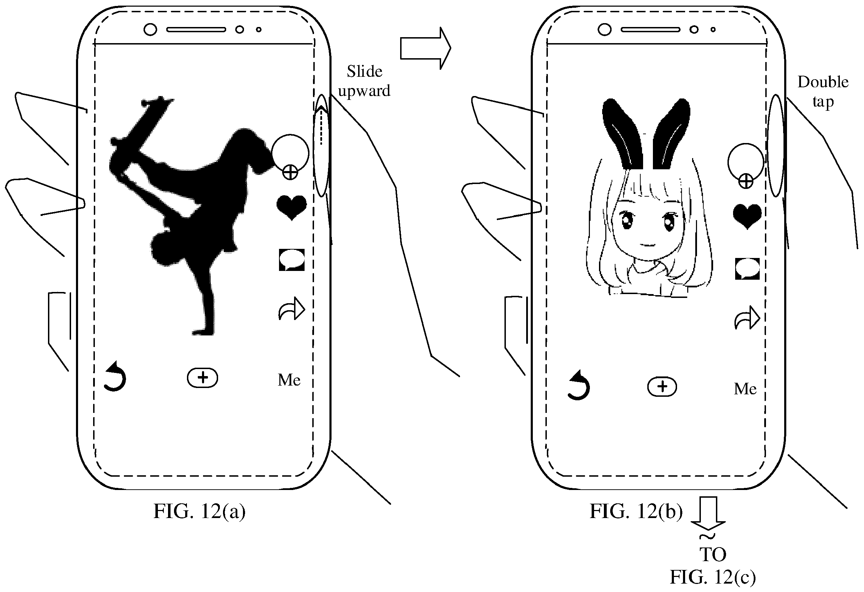

For example, refer to FIG. 12(a). A current scenario is a short video application scenario. Based on the mapping relationship shown in Table 4, if the mobile phone detects a slide up/down operation performed by the user in the target region, the mobile phone determines that a corresponding response operation is an operation of switching a short video. Therefore, as shown in FIG. 12(b), the mobile phone switches to a to-be-played short video.

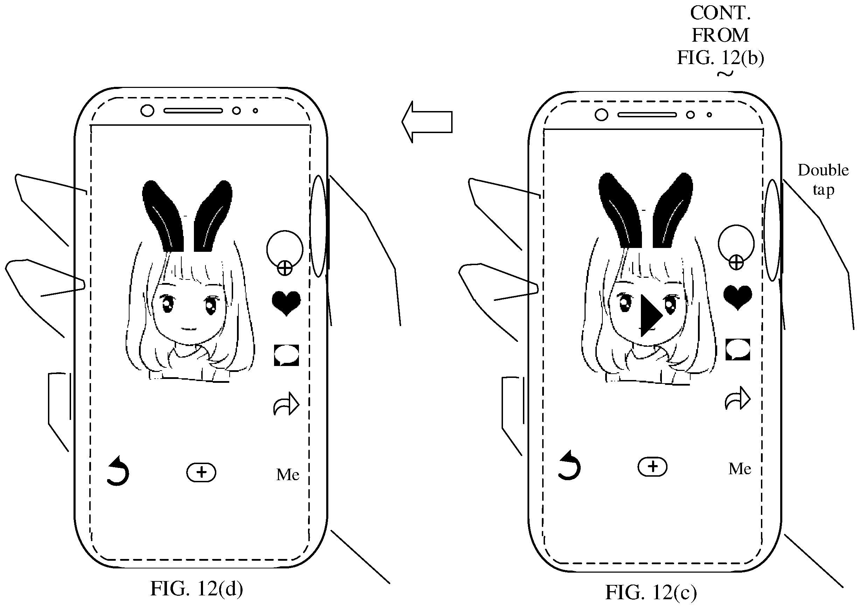

Refer to FIG. 12(b). If the short video is currently being played, and the mobile phone detects a double-tap operation performed by the user in the target region, the mobile phone determines that a corresponding response operation is a pause operation. Therefore, as shown in FIG. 12(c), the mobile phone pauses the short video. Then, if the mobile phone detects a double-tap operation performed by the user in the target region again, the mobile phone determines that a corresponding response operation is a playing operation. Therefore, as shown in FIG. 12(d), the mobile phone continues playing the short video.

For another example, for a mapping relationship corresponding to a video application or a music application, refer to Table 5.

**Table 5**

| Mapping relationship | |
|---|---|
| Touch operation | Response operation |
| Single tap in a target region | Select |
| Slide left/right in the target region | Switch a selected selection option/control/parameter |
| Slide up/down in the target region | Increase or decrease a value of the selected parameter |
| Double tap in the target region | Play/pause |

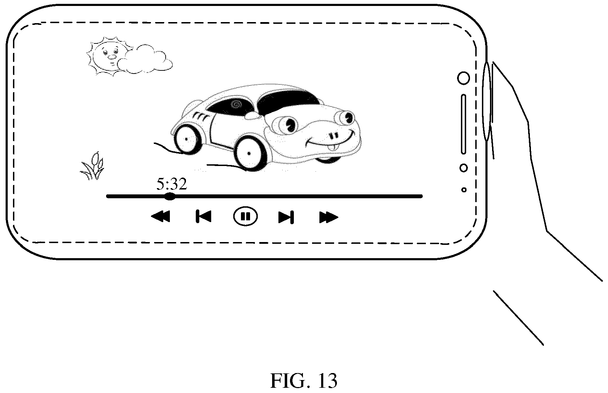

For example, refer to FIG. 13. A current scenario is a video playing scenario. Based on the mapping relationship shown in Table 5, if the mobile phone detects a slide left/right operation performed by the user in the target region, the mobile phone determines that a corresponding response operation is an operation of switching a selected selection option/control/parameter, where the control includes fast-forward, rewind, play/pause, previous-episode, next-episode, and the like.

For another example, for a mapping relationship corresponding to a video application or a music application, refer to Table 6.

**Table 6**

| Mapping relationship | |
|---|---|
| Touch operation | Response operation |
| Single tap in a target region | Select |
| Slide left/right in the target region | Rewind/fast-forward |
| Slide up/down in the target region | Increase or decrease volume |
| Double tap in the target region | Play/pause |
| Touch and hold in the target region | Switch a selected selection option/control/parameter |

For another example, for a mapping relationship corresponding to a social application, refer to Table 7.

**Table 7**

| Mapping relationship | |
|---|---|
| Touch operation | Response operation |
| Single tap in a target region | Select |
| Slide left/right in the target region | Switch a selected selection option/control/parameter leftward/rightward |
| Slide up/down in the target region | Switch the selected selection option/control/parameter upward/downward |
| Double tap in the target region | Return operation |

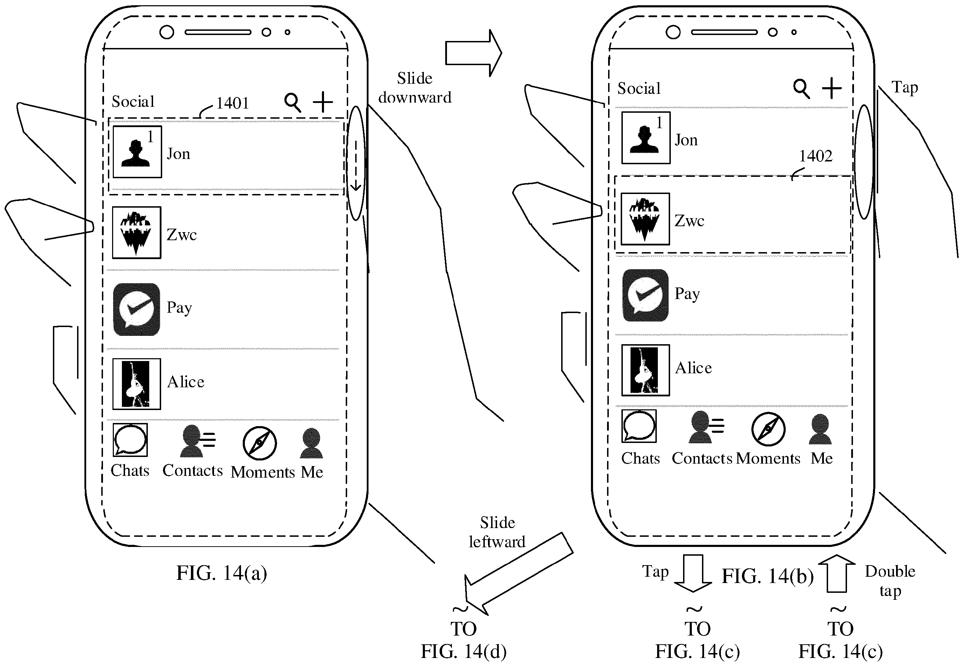

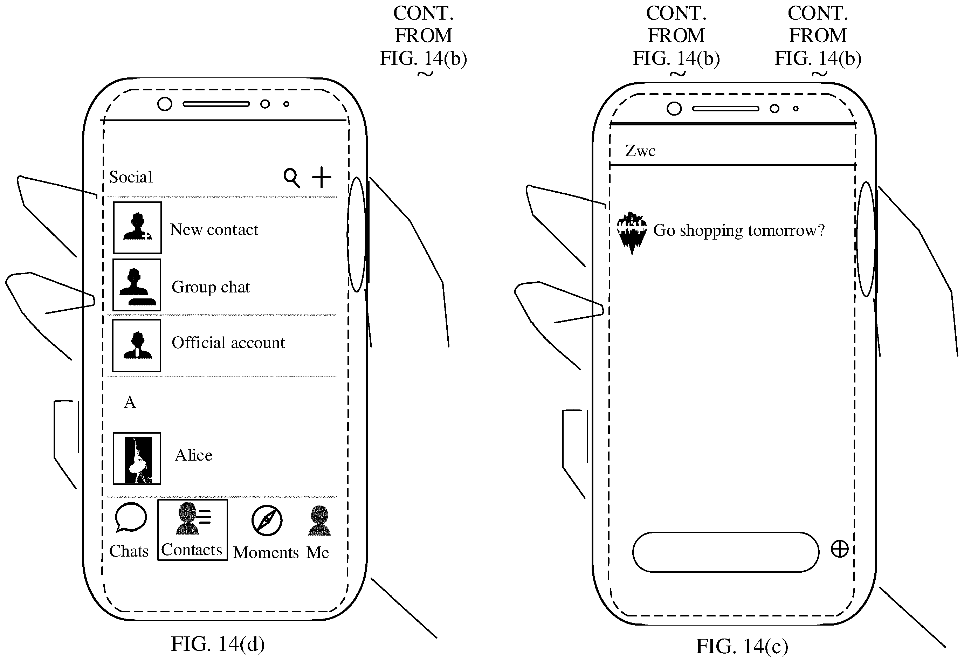

For example, refer to FIG. 14(a). A current scenario is a social application scenario. The mobile phone currently selects a first card 1401 in a "Chats" function interface. Based on the mapping relationship shown in Table 7, if the mobile phone detects a slide down operation performed by the user in the target region, the mobile phone determines that a corresponding response operation is switching a selected selection option/control/parameter downward. Therefore, as shown in FIG. 14(b), the mobile phone selects a second card 1402 downward. If the mobile phone detects a single-tap operation performed by the user in the target region, the mobile phone determines that a corresponding response operation is a select operation, to enter chat content that corresponds to the second card and that is shown in FIG. 14(c). If the mobile phone detects a double-tap operation performed by the user in the target region, the mobile phone determines that a corresponding response operation is a return operation, to return to an interface shown in FIG. 14(b).

If the mobile phone detects a slide left operation performed by the user in the target region, the mobile phone determines that a corresponding response operation is switching a selected selection option/control/parameter leftward, to switch to a contacts interface shown in FIG. 14(d).

It may be understood that the mapping relationships shown in the foregoing tables are merely examples for description, and there may alternatively be another mapping relationship. This is not limited in this embodiment of this application.

In this way, the mobile phone performs response processing for the touch operation performed by the finger of the user on the target region on the side edge, to replace a touch operation performed by the user in the middle region of the screen, that is, the finger of the user does not need to reach a control in the middle region of the screen to perform the operation. Therefore, a one-hand operation of the user can be facilitated, a one-hand shortcut operation manner can be added, and user experience can be improved.

For example, in a selfie taking scenario, when the touch operation method provided in embodiments of this application is used, the mobile phone may perform photographing processing for a touch operation performed by the finger of the user on the target region on the side edge, to replace a related photographing operation performed by the user in the middle region of the screen, that is, the finger of the user does not need to reach a control in the middle region of the screen to perform the photographing operation. Therefore, an operation amplitude of the finger can be shortened, selfie taking of the user can be facilitated, and selfie taking experience of the user can be improved.

For another example, in an e-book reading scenario, when the touch operation method provided in embodiments of this application is used, the mobile phone may turn a page for a slide operation performed by the finger of the user on the target region on the side edge, to replace a slide operation or the like performed by the user in the middle region of the curved screen, that is, the finger of the user does not need to reach the middle region of the curved screen to perform page turning control. Therefore, an operation amplitude of the finger can be shortened, page turning of the user can be facilitated, reading can be smoother, and reading experience of the user can be improved.

In some other embodiments, the mapping relationship may be a function-level mapping relationship. Different functions of a same application may correspond to different mapping relationships. For example, a social application may include a plurality of functions such as "Chats", "Contacts", "Moments", and "Me", and different functions may correspond to different mapping relationships. The mobile phone may perform response processing based on a mapping relationship corresponding to a function used in a current application scenario.

In some other embodiments, the mapping relationship may be an interface-level mapping relationship, and different interfaces may correspond to different mapping relationships. For example, for an e-book reader, an e-book browsing interface and another interface may respectively correspond to different mapping relationships. In some technical solutions, the mobile phone may determine, based on a structure, a layout, or another feature of a to-be-displayed interface, a mapping relationship corresponding to the to-be-displayed interface.

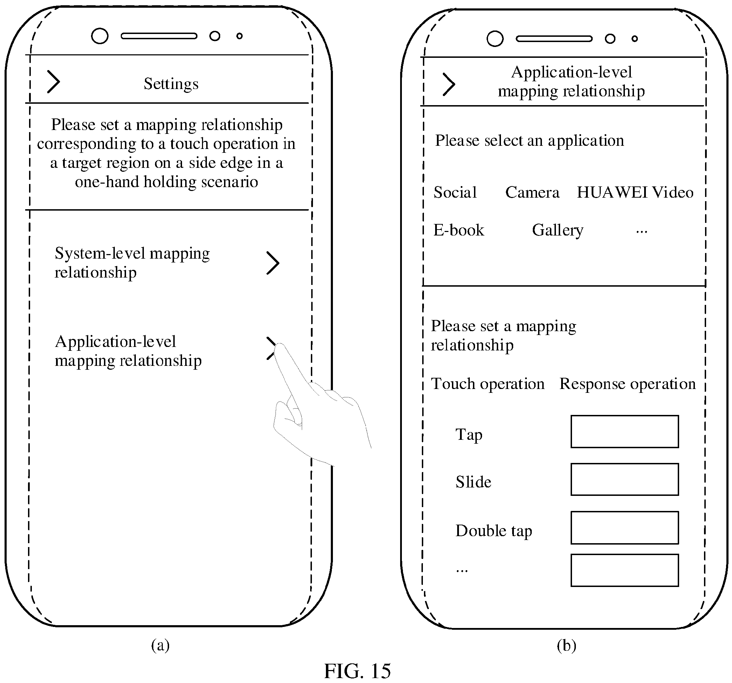

In some other embodiments, a mapping relationship between a touch operation and a response operation may not be preset, but is set by the user. The user may set a system-level mapping relationship, an application-level mapping relationship, a function-level mapping relationship, or an interface-level mapping relationship. For example, for pages for setting the mapping relationship, refer to (a) and (b) in FIG. 15. In a setting interface shown in (a) in FIG. 15, the mobile phone may prompt the user with "Please set a mapping relationship corresponding to a touch operation in a target region on a side edge in a one-hand holding scenario". The mapping relationship that may be set by the user includes a system-level mapping relationship, an application-level mapping relationship, or the like. For example, after detecting an operation that the user taps "Application-level mapping relationship" shown in (a) in FIG. 15, the mobile phone may display an application-level mapping relationship setting interface shown in (b) in FIG. 15. In the application-level mapping relationship setting interface, the user may choose to set response operations corresponding to touch operations of the finger of the user in different applications. For example, the application may include a social application, a camera application, a video application, an e-book application, or a gallery application. For example, the touch operation of the finger of the user may include a tap operation, a slide operation, or a double-tap operation. The user may set response operations respectively corresponding to different touch operations. For example, in different applications, for a correspondence between the touch operation of the finger of the user and the response operation, refer to Table 2 to Table 7.

In addition, after detecting an operation that the user taps "System-level mapping relationship" shown in (a) in FIG. 15, the mobile phone may display a system-level mapping relationship setting interface, to set a response operation corresponding to the touch operation of the finger of the user in the system-level mapping relationship. For example, for a correspondence between the touch operation of the finger of the user and the response operation in the system-level mapping relationship, refer to Table 1.

In some embodiments, the mobile phone may prompt the user with the mapping relationship through display, a sound, or the like, so that the user performs a touch operation on the target region based on the mapping relationship, to touch the middle region of the curved screen.

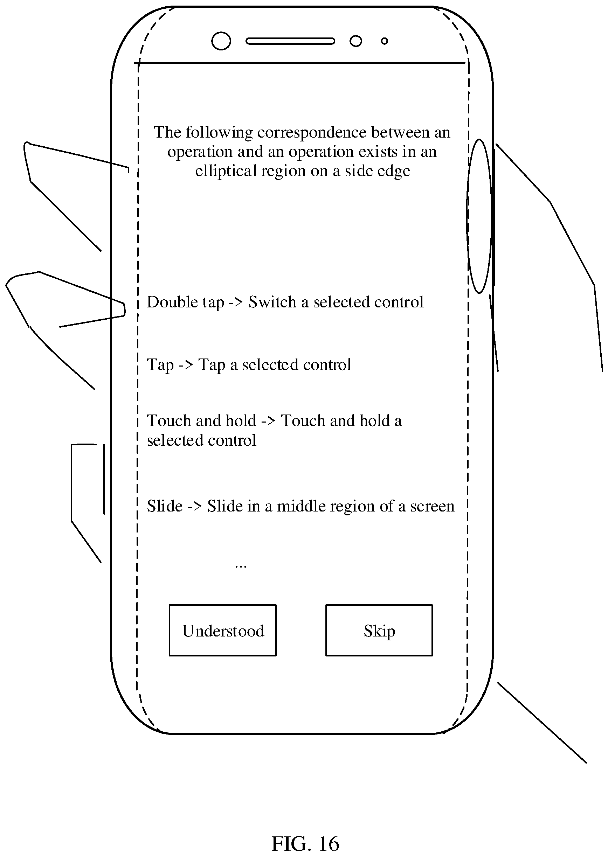

For example, after determining the target region, the mobile phone may prompt the user with the system-level mapping relationship by displaying text, a chart, a schematic operation diagram, or the like. The mobile phone having the curved screen shown in FIG. 4B is used as an example. Refer to FIG. 16. The mobile phone may prompt a user with a mapping relationship in a text description manner. As shown in FIG. 16, the mobile phone may prompt the user with "The following correspondence between an operation and a response exists in an elliptical region on a side edge". A response operation corresponding to a double-tap operation is switching a selected control; a response operation corresponding to a tap operation is tapping a selected control; a response operation corresponding to a touch and hold operation is touching and holding a selected control; a response operation corresponding to a slide operation is sliding in a middle region of a screen; and the like.

For another example, after determining the target region, if the mobile phone opens an e-book reader according to an instruction of the user, the mobile phone may prompt the user with an application-level mapping relationship corresponding to the e-book reader. If the mobile phone opens a camera application according to an instruction of the user, the mobile phone may prompt the user with an application-level mapping relationship corresponding to the camera application.

For another example, after determining the target region, if the mobile phone enables a chat function of a social application according to an instruction of the user, the mobile phone may prompt the user with a function-level mapping relationship corresponding to the chat function. If the mobile phone enables a contacts function of the social application according to an instruction of the user, the mobile phone may prompt the user with a function-level mapping relationship corresponding to the contacts function.

It can be learned from the foregoing descriptions that specific locations of target regions on side edges of the mobile phone are different in left and right-hand holding modes. In the left and right-hand holding modes, specific operation manners of a same touch operation performed by the user on the target regions may be the same or different. For example, single-tap operations in the left and right-hand holding modes each are a tap operation performed by a finger of the user on the target region. For another example, a slide left operation in the left-hand holding mode is a slide left operation performed by the finger of the user on the target region on a plane on which a target region is located (for example, a slide left rear operation, where the rear herein is in a same direction as the back of the mobile phone). A slide left operation in the right-hand holding mode is a slide left operation performed by the finger of the user on the target region on a plane on which a target region is located (for example, a slide left front operation, where the front herein is in an opposite direction of the back of the mobile phone).

In some embodiments, mapping relationships between touch operations and response operations corresponding to the left and right-hand holding modes are the same, for example, may be the mapping relationships described in Table 1 to Table 7. In some other embodiments, the mapping relationship between the touch operation and the response operation corresponding to the left-hand holding mode is different from the mapping relationship between the touch operation and the response operation corresponding to the right-hand holding mode. For example, in the left-hand holding mode, a response operation corresponding to a slide left operation performed by the finger of the user on the target region is switching a selection option/a control/a parameter. In the right-hand holding mode, a response operation corresponding to a slide right operation performed by the finger of the user on the target region is switching a selection option/a control/or a parameter.

It can be learned from the foregoing descriptions that the mobile phone may perform response processing for a touch operation on the contact region, to replace a touch operation performed by the user in the middle region of the curved screen. Therefore, the target region may also be understood as a virtual button.

In some other embodiments, the mobile phone may generate a virtual button at a location of the target region, and perform response processing for an operation performed by the user on the virtual button. Although not shown in the figure, step 203 may be replaced with the following step.

203A: The mobile phone generates a virtual button in the target region, and prompts the user with the virtual button.

In some embodiments, after determining the target region, the mobile phone may generate a virtual button in the target region, and prompt the user with a location of the virtual button, so that the user performs a touch operation on the virtual button, to control the mobile phone through the touch operation.

In some other embodiments, after determining the target region, if the mobile phone detects that a finger of the user leaves the target region, the mobile phone generates a virtual button in the target region, and prompts the user with a location of the virtual button.

Step 204 may be replaced with the following step.

204A: The mobile phone detects a touch operation performed by the user on the virtual button.

Because the virtual button is generated in the target region, the touch operation performed by the user on the virtual button is a touch operation on the target region.

In this way, in a one-hand holding mode, the mobile phone may perform response processing for an operation performed by the user on the virtual button on the side edge of the mobile phone, and the user does not need to specially reach a middle region of a curved screen in the one-hand holding mode to perform a touch operation.

In some embodiments, after the mobile phone locks the target region in step 203, if the mobile phone does not detect, within preset duration 1, the touch operation performed by the user on the target region, the mobile phone may cancel locking of the target region, and perform step 201 to step 205 again instead of directly performing response processing after detecting the touch operation performed by the user on the target region.

In some other embodiments, after the mobile phone displays the prompt mark in the target region in step 203, if the mobile phone does not detect, within preset duration 1, the touch operation performed by the user on the target region, the mobile phone stops displaying the prompt mark, and performs step 201 to step 205 again instead of directly performing response processing after detecting the touch operation performed by the user on the target region.

In some other embodiments, the mobile phone displays the prompt mark after locking the target region, and stops displaying the prompt mark after canceling locking of the target region.

That is, the mobile phone may subsequently re-identify the one-hand holding mode and determine the target region in real time. In this way, the target region determined by the mobile phone corresponds, in real time, to a location of the finger of the user each time the mobile phone is held. When the finger of the user naturally touches the side edge of the mobile phone, the user can perform a touch operation on the target region, and does not need to specially adjust the location of the finger to touch the target region. Therefore, a user operation is more convenient.

In some other embodiments, after the mobile phone displays the prompt mark in the target region in step 203, the mobile phone continues displaying the prompt mark, and performs response processing for the touch operation performed by the user on the target region.

In some other embodiments, after the mobile phone displays the prompt mark in the target region in step 203, if the mobile phone does not detect, within preset duration 1, the touch operation performed by the user on the target region, the mobile phone stops displaying the prompt mark. After detecting a preset operation of the user, the mobile phone displays the prompt mark in the target region again, and performs response processing for the touch operation performed by the user on the target region. For example, the preset operation may be a touch operation, an air gesture, or a voice operation. When the user holds the mobile phone with one hand, a contact region of a finger of the user usually does not change greatly. Therefore, in this solution, the mobile phone does not need to identify the location of the target region again, but may directly display the prompt mark based on the previously determined target region.

In some other embodiments, after the mobile phone displays the prompt mark in the target region in step 203, if the mobile phone does not detect, within preset duration 1, the touch operation performed by the user on the target region, the mobile phone stops displaying the prompt mark. If the mobile phone detects that the user touches the target side edge, the user may expect to perform a one-hand operation. Therefore, the mobile phone may directly display the prompt mark.

In some other embodiments, after the mobile phone displays the prompt mark in the target region in step 203, if the mobile phone does not detect, within preset duration 1, the touch operation performed by the user on the target region, the mobile phone stops displaying the prompt mark. If the mobile phone detects that the user touches the target region, the user may expect to perform a one-hand operation. Therefore, the mobile phone may directly display the prompt mark.

In some embodiments, when the mobile phone displays the prompt mark, if the mobile phone detects the touch operation performed by the user on the middle region of the curved screen, it may be considered that the user may no longer expect to continue performing the one-hand operation. Therefore, the mobile phone may respond to the touch operation performed by the user on the middle region of the curved screen, and stop displaying the prompt mark.

In some other embodiments, response processing performed by the mobile phone for the touch operation on the target region and response processing performed by the mobile phone for the touch operation on the middle region of the curved screen do not affect each other. When the mobile phone displays the prompt mark, if the mobile phone detects the touch operation performed by the user on the middle region of the curved screen, the mobile phone responds to the touch operation performed by the user on the middle region of the curved screen, and continues displaying the prompt mark. For example, if the user selects a control 1 by performing a touch operation on the target region, and the user selects a control 2 by performing an operation on the middle region of the curved screen, the mobile phone selects the control 2, and continues displaying the prompt mark.

In addition, a software system of the electronic device 100 may use a layered architecture, an event-driven architecture, a microkernel architecture, a micro function architecture, or a cloud architecture. In embodiments of this application, an Android (Android) system with a layered architecture is used as an example to describe the software structure of the electronic device 100.

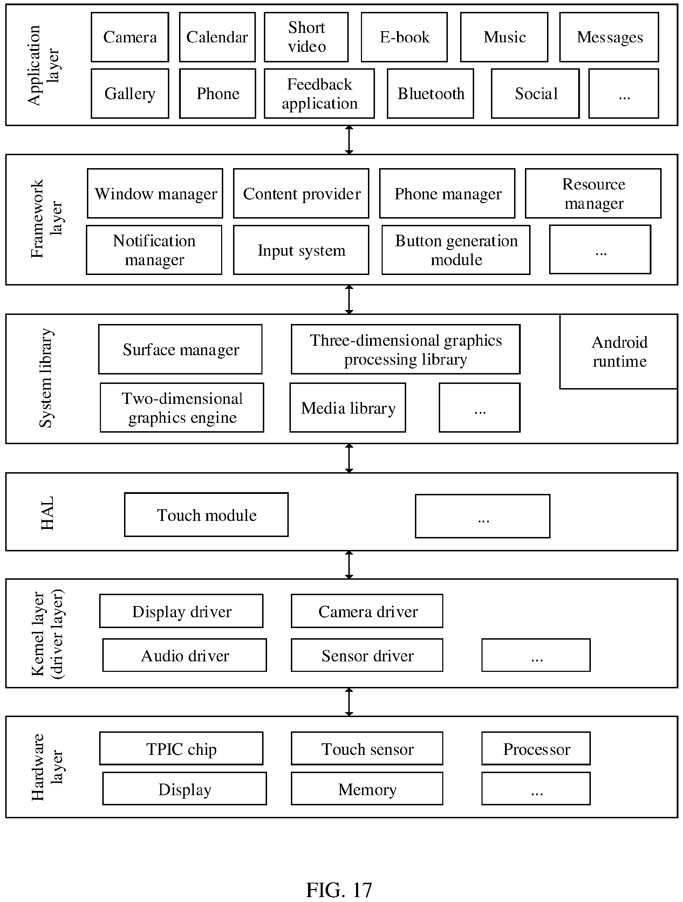

FIG. 17 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, a framework layer, an Android runtime (Android runtime) and system library, a hardware abstraction layer (hardware abstraction layer, HAL), and a kernel layer from top to bottom. The application layer may include a series of application packages.

As shown in FIG. 17, the application package may include a camera application, a gallery application, a calendar application, a phone application, a map application, a navigation application, a WLAN application, a Bluetooth application, a music application, a video application, a Messages application, an e-book application, a feedback application, or the like.

The framework layer provides an application programming interface (application programming interface, API) and a programming framework for application programs at the application layer. The framework layer includes some predefined functions.

As shown in FIG. 17, the framework layer may include one or more of the following modules: a window manager, a content provider, a view system, a phone manager, a resource manager, a notification manager, an input (input) system, a button generation module, or the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application program. The data may include a video, an image, audio, calls that are made and received, a browsing history and a bookmark, an address book, and the like.

The view system includes visualized controls such as a control for displaying text and a control for displaying an image. The view system may be configured to construct an application program. A display interface may include one or more views. For example, a display interface including an SMS message notification icon may include a text display view and an image display view.

The phone manager is configured to provide a communication function of the electronic device 100, for example, management of a call status (including answering, hanging up, or the like).

The resource manager provides various resources for an application program, such as a localized character string, an icon, an image, a layout file, and a video file.

The notification manager enables an application program to display notification information in a status bar, and may be configured to convey a notification message. The notification manager may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application program running in a background, or may be a notification that appears on the display in a form of a dialog window. For example, text information is displayed in the status bar, a prompt tone is played, the electronic device vibrates, or an indicator light blinks.

The input system is configured to provide a holding event obtained from a touch module at the HAL for the feedback application at the application layer, where the holding event is used to indicate that a current mode is a one-hand holding mode and indicate a target region touched by the thumb, so that the feedback application prompts the user with the target region.

The button generation module is configured to generate a virtual button at a location of the target region.

The Android runtime includes a core library and a virtual machine. The Android runtime is responsible for scheduling and management of the Android system.

The kernel library includes two parts: a performance function that needs to be invoked by Java language, and a core library of Android.

The application layer and the framework layer run in the virtual machine. The virtual machine executes Java files at the application layer and the framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D map layers for a plurality of application programs.

The media library supports playback and recording of audio and videos in a plurality of commonly used formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The HAL is an interface layer located between an operating system kernel and a hardware circuit, and may abstract hardware. The HAL includes the touch module. The touch module may be configured to: identify a one-hand holding mode, and determine information such as a contact region (that is, a target region) of a finger of a user on a side edge of the electronic device in the one-hand holding mode.

The kernel layer is a layer between hardware and software. The kernel layer includes at least a display driver, a camera driver, an audio driver, and a sensor driver. The kernel layer may also be referred to as a driver layer.

The hardware refers to various physical apparatuses in an electronic device including an electronic element, a mechanical element, an optoelectronic element, and the like. These physical apparatuses form an organic whole to provide a material basis for an operation of electronic device software. For example, the hardware may include a touch panel integrated circuit (touch panel integrated circuit, TPIC) chip, a touch sensor, a display, a processor, and a memory. The hardware may further include another component shown in FIG. 1 or a component other than the component in FIG. 1. This is not limited herein. The TPIC chip is connected to the touch sensor, and is configured to obtain touch data detected by the touch sensor. The touch sensor and the display may be combined into a touchscreen.

The following describes, from perspectives of a software module and a hardware module inside a mobile phone, the touch operation method provided in embodiments of this application. In this embodiment of this application, the operating system (for example, the framework layer) may determine, based on information reported by underlying hardware, information such as a one-hand holding mode, a location of a target region, or a touch operation performed by a user on the target region, and provide a related interface, so that an application can learn of the information such as the one-hand holding mode, the location of the target region, and the touch operation performed by the user on the target region. A target application corresponding to a current application scenario may obtain, from the interface, information such as the touch operation performed by the user on the target region, and perform response processing for the touch operation based on the foregoing mapping relationship.

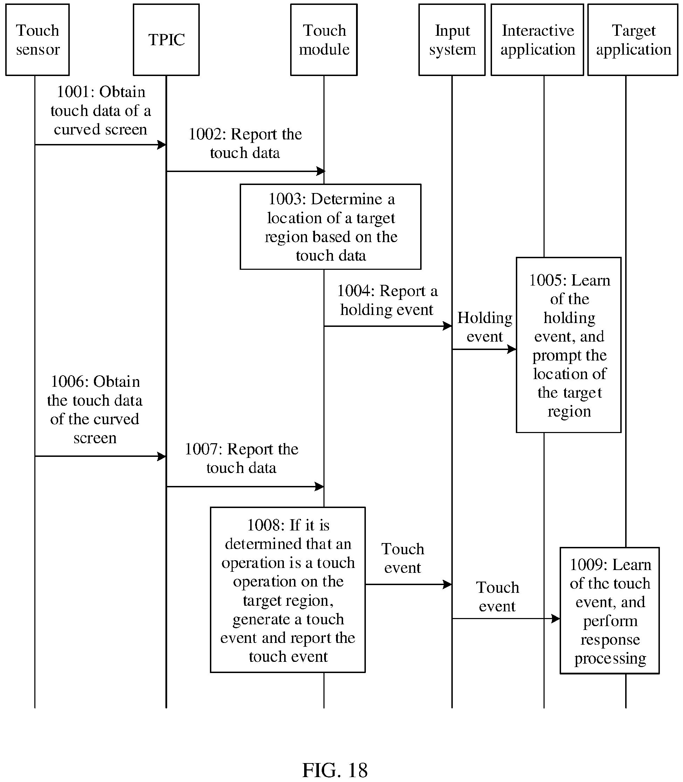

Refer to FIG. 18. From perspectives of a software module and a hardware module inside a mobile phone, the touch operation method provided in embodiments of this application may include the following steps.

1001: A TPIC chip obtains touch data of a curved screen by using a touch sensor.

As shown above, the curved screen may be a capacitive touchscreen, a pressure touchscreen, or the like, and the touch data may be capacitance data, pressure data, or the like. The touch sensor may detect the touch data, and the TPIC chip may obtain the touch data by using the touch sensor.

1002: The TPIC chip reports the touch data to a touch module at an HAL through a driver layer.

1003: The touch module determines a location of a target region based on the touch data.

The touch module may determine the target region based on a preset algorithm and the obtained touch data. For this process, refer to the procedure shown in FIG. 3.

1004: The touch module generates a holding event and reports the holding event to an input system at a framework layer, where the holding event is used to indicate that a current mode is a one-hand holding mode and indicate the target region touched by a finger of a user, and the input system records the location of the target region.

1005: After learning of the holding event from the input system, a feedback application at an application layer prompts the user with the location of the target region.

The feedback application at the application layer learns of the holding event from the input system, that is, the input system provides, for the feedback application, an interface for obtaining related information such as the one-hand holding mode and the target region touched by the finger of the user.

The feedback application prompts the user with the location of the target region. For example, the feedback application displays a prompt mark in the target region through a UI. For another example, the feedback application provides a vibration prompt in the target region by using a motor.

1006: The TPIC chip obtains the touch data of the curved screen by using the touch sensor.

1007: The TPIC chip reports the touch data to the touch module at the HAL through the driver layer.

1008: If the touch module determines, based on the touch data, that an operation is a touch operation on the target region, the touch module generates a touch event based on the touch operation, and reports the touch event to the input system.

The touch module generates the touch event based on information such as touch coordinates and a timestamp of the touch operation. The touch event may include single-tap, double-tap, touch and hold, slide (for example, slide left, slide right, slide up, or slide down), or the like performed on the target region.

1009: A target application at the application layer learns of the touch event from the input system, and performs response processing for the touch event.

For example, the target application may be an application running in the foreground or a preset application. After obtaining, from the input system, the touch event performed by the user on the target region, the target application may perform response processing for the touch event based on the foregoing mapping relationship, to replace a touch operation performed by the user in a middle region of the curved screen. Therefore, a one-hand shortcut operation manner is added, and user experience is improved.

For example, the application running in the foreground is a camera application. The camera application may obtain, from the input system, a touch event generated based on a touch operation performed by the user on a target region, and perform response processing for the touch event, such as switching a photographing mode or taking a photo.

In this way, the mobile phone may determine, by using internal modules, a contact region of the finger of the user on the side edge of the mobile phone in the one-hand holding mode, and perform response processing for the touch operation performed by the user on the contact region, to replace a touch operation performed by the user in the middle region of the curved screen. Therefore, the user can conveniently and naturally perform a one-hand operation, a one-hand shortcut operation manner is added, and user experience is improved.

In some other embodiments, the input system may record a target object in step 1004, where a location of the target object is the location of the target region. The feedback application may prompt the user with the location of the target region in step 1005. If the touch module determines, based on the touch data in step 1008, that the operation is a touch operation on the target object, the touch module generates a touch event based on the touch operation, and reports the touch event to the input system. The target application may perform, in step 1009, response processing for the touch event corresponding to the target object.

In some other embodiments, the target region may also be understood as a virtual button. In this case, although not shown in the figure, step 1005 may be replaced with the following steps.

1005A: A button generation module at the framework layer generates a virtual button at the location of the target region.

For example, the button generation module at the framework layer registers and records a button a, where a location of the button a is the location of the target region. That is, the framework layer generates the button a at the location of the target region, and the button a is referred to as the virtual button.

In some other embodiments, the framework layer does not generate a specific button, and locking the target region by the framework layer may be referred to as generating the virtual button.

1005B: After obtaining the virtual button from the button generation module, the feedback application prompts the user with a location of the virtual button.

Step 1008 may be replaced with the following step.

1008A: If the touch module determines, based on the touch data, that an operation is a touch operation on the virtual button, the touch module generates a touch event based on the touch operation, and reports the touch event to the input system.

In this way, in a one-hand holding mode, the mobile phone may perform response processing for the operation performed by the user on the virtual button on the side edge of the mobile phone, and the user does not need to specially reach the middle region of the curved screen in the one-hand holding mode to perform a touch operation.

It should be noted that the foregoing uses the mobile phone having the curved screen and having no physical button on the side edge as an example for description. In some other embodiments, a physical button may also be disposed on the side edge of the mobile phone. The prompt mark in the target region may not overlap the physical button, or may partially or completely overlap the physical button.

When the target region overlaps the physical button, if the mobile phone detects a touch operation performed by the user on the prompt mark, and does not detect a press operation on the physical button, the mobile phone performs response processing for the touch operation performed by the user on the prompt mark.

When the target region overlaps the physical button, if the mobile phone detects a press operation performed by the user on the physical button, and also detects a touch operation on the target region, the mobile phone preferentially responds to an operation with a high priority. A priority may be predefined or set by the user. For example, the operation with the high priority is an operation performed by the user on the target region. For another example, the operation with the high priority may be an operation performed by the user on the physical button.

It should be further noted that the foregoing uses the mobile phone having the curved screen as an example for description. In some other embodiments, the mobile phone may not have a curved screen. For the mobile phone having the curved screen, the curved screen includes a touch sensor, and the mobile phone may directly perform a touch response by using the touch sensor of the curved screen without additionally disposing a touch sensor. This can further reduce costs of disposing the additional touch sensor, and save space occupied by the additional touch sensor inside the mobile phone.

In the solutions in the foregoing embodiments, the mobile phone may identify the contact region of the finger of the user on the side edge of the mobile phone in the one-hand holding mode, and perform response processing for the touch operation performed by the finger of the user on the contact region. It should be noted that the operation method provided in embodiments of this application is not limited to the one-hand holding mode. In some other embodiments, the mobile phone may identify a two-hand holding mode. For example, in the two-hand holding mode, a thumb and a thenar of one hand touch one side edge of the mobile phone, a thumb and a thenar of the other hand touch a side edge opposite to the side edge, and other fingers of the two hands hold the back of the mobile phone. In the two-hand holding mode, the mobile phone may identify a contact region of a thumb that first contacts a side edge of the mobile phone, and perform response processing for a touch operation on the contact region. In some other embodiments, in the two-hand holding mode, the mobile phone may also respectively identify contact regions of the two thumbs that contact side edges of the mobile phone, and respectively perform response processing for touch operations on the two contact regions. For example, in a game playing scenario in which a user holds the mobile phone with two hands in a landscape mode, the thumb of the left hand of the user corresponds to a move left control, and a response operation corresponding to a touch operation on the move left control is moving a location of a protagonist of a game leftward; and the thumb of the right hand of the user corresponds to a move right control, and a response operation corresponding to a touch operation on the move right control is moving the location of the protagonist of the game rightward. For another example, a response operation corresponding to a slide operation of the thumb of the left hand of the user is moving the location of the protagonist of the game, and a response operation corresponding to an operation such as single-tap or double-tap of the thumb of the right hand of the user is jumping, rolling, or the like of the protagonist of the game. In the two-hand holding mode, the thumb performs a touch operation on the side edge of the mobile phone, and the finger of the user does not need to reach a control in a middle region of a screen to perform an operation. Therefore, an operation amplitude of the finger can be shortened, an operation of the user can be facilitated, and user experience can be improved.

It should be further noted that the foregoing description is provided by using an example in which the electronic device is a mobile phone. The touch operation method provided in this embodiment of this application may be further applied to another electronic device. Details are not described in this embodiment of this application.

It may be understood that, to implement the foregoing functions, the electronic device includes a corresponding hardware and/or a software module for performing each function. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In the embodiments, the electronic device may be divided into functional modules based on the foregoing method examples. For example, each functional module may be obtained through division based on corresponding functions, or two or more functions may be integrated into one processing module. The integrated module may be implemented in a form of hardware. It should be noted that, in the embodiments, division into the modules is an example, is merely logical function division, and may be other division in an actual implementation.

An embodiment of this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the touch operation method in the foregoing embodiments.

An embodiment of this application further provides a computer-readable storage medium. The computer-readable storage medium stores computer instructions. When the computer instructions are run on an electronic device, the electronic device is enabled to perform the related method steps, to implement the touch operation method in the foregoing embodiments.

An embodiment of this application further provides a computer program product. When the computer program product runs on a computer, the computer is enabled to perform the related steps, to implement the touch operation method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computer execution instructions, and when the apparatus runs, the processor may execute the computer execution instructions stored in the memory, so that the chip is enabled to perform the touch operation method performed by the electronic device in the foregoing method embodiments.

The electronic device, the computer-readable storage medium, the computer program product, or the chip provided in the embodiments is configured to perform the corresponding method provided above. Therefore, for beneficial effects that can be achieved, refer to the beneficial effects in the corresponding method provided above. Details are not described herein again.

Based on descriptions of the foregoing implementations, a person skilled in the art may understand that, for the purpose of convenient and brief descriptions, division into the foregoing functional modules is merely used as an example for description. In an actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, and may be located in one place, or may be distributed on different places. Some or all of the units may be selected based on actual requirements to achieve the objectives of the solution of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A touch operation method, applied to an electronic device having a curved screen, wherein the curved screen comprises a side edge of the electronic device, and the method comprises:
detecting that the side edge is touched;
determining a target region, wherein the target region is a contact region of a user on the side edge in a holding mode;
prompting a location of the target region;
detecting a touch operation performed by the user on the target region; and
performing a corresponding response operation for the touch operation.

2. The method according to claim 1, wherein the prompting a location of the target region comprises:
displaying a prompt mark at the location of the target region.

3. The method according to claim 1 or 2, wherein before the prompting a location of the target region, the method further comprises:
detecting that a hand of the user releases the target region.

4. The method according to any one of claims 1 to 3, wherein the determining a target region comprises:
determining the target region based on a preset algorithm model and touch information, wherein the touch information comprises one or more of a quantity of contact regions of the user on the side edge, a relative location of the contact region, an area of the contact region, or a contact semaphore.

5. The method according to claim 4, wherein the electronic device further comprises a gyroscope, and the determining the target region based on a preset algorithm model and touch information comprises:
determining the target region based on the preset algorithm model, the touch information, and gyroscope data.

6. The method according to claim 4 or 5, wherein the algorithm model comprises a left-hand matching model and a right-hand matching model, the left-hand matching model is used to determine a target region in a left-hand holding mode, and the right-hand matching model is used to determine a target region in a right-hand holding mode.

7. The method according to any one of claims 1 to 3, wherein the determining a target region comprises:
determining the holding mode based on touch information, wherein the touch information comprises one or more of a quantity of contact regions of the user on the side edge, a relative location of the contact region, an area of the contact region, or a contact semaphore; and
determining the target region in the holding mode based on the touch information.

8. The method according to claim 7, wherein the side edge comprises a first side edge and a second side edge that are opposite to each other, and the determining the holding mode based on touch information comprises:
if it is determined, based on the touch information, that the first side edge comprises two contact regions, and the second side edge comprises three contact regions, determining that the electronic device is in the holding mode; and
the determining the target region in the holding mode based on the touch information comprises:
determining that the target region in the holding mode is located on the first side edge comprising the two contact regions; and
determining a contact region with a smaller area in the two contact regions comprised on the first side edge as the target region.

9. The method according to any one of claims 1 to 3, wherein the determining a target region comprises:
prompting the user to perform a preset operation in a to-be-operated region on the side edge; and
if the preset operation performed by the user on the side edge is detected, determining that a region on which the preset operation is performed is the target region.

10. The method according to any one of claims 1 to 9, wherein the touch operation comprises a single-tap operation, a double-tap operation, a touch and hold operation, a slide operation, or a pressure press operation; and the performing a corresponding response operation for the touch operation comprises:
in response to the touch operation, selecting a selection option, a control, or a parameter, switching the selected selection option, control, or parameter, or adjusting a value of the parameter.

11. The method according to any one of claims 1 to 9, wherein the curved screen further comprises a middle region, and the performing a corresponding response operation for the touch operation comprises:
if the touch operation is a double-tap operation, switching a selected selection option, control, or parameter;
if the touch operation is a single-tap operation, performing the single-tap operation on the selected selection option or control;
if the touch operation is a touch and hold operation, performing the touch and hold operation on the selected selection option or control;
if the touch operation is a slide left or right operation, performing the slide left or right operation in the middle region of the curved screen; or
if the touch operation is a slide up or down operation, performing the slide up or down operation in the middle region of the curved screen.

12. The method according to any one of claims 1 to 10, wherein the performing a corresponding response operation for the touch operation comprises:
performing the corresponding response operation for the touch operation based on an application.

13. The method according to claim 12, wherein the application is a camera application, and the performing the corresponding response operation for the touch operation based on an application comprises:
if the touch operation is the single-tap operation, selecting a selection option, a control, or a parameter in the camera application;
if the touch operation is a slide left or right operation, switching the selected selection option, control, or parameter;
if the touch operation is a slide up or down operation, increasing or decreasing a value of the selected parameter; or
if the touch operation is the double-tap operation, quickly taking a photo.

14. The method according to claim 12, wherein the application is an e-book reader, and the performing the corresponding response operation for the touch operation based on an application comprises:
if the touch operation is the slide operation, turning a page.

15. The method according to any one of claims 1 to 9, wherein the determining a target region comprises:
determining a type of the holding mode and the target region, wherein the type of the holding mode comprises the left-hand holding mode or the right-hand holding mode; and
the performing a corresponding response operation for the touch operation comprises:
if the type of the holding mode is the left-hand holding mode, performing a corresponding first response operation for the touch operation; or
if the type of the holding mode is the right-hand holding mode, performing a corresponding second response operation for the touch operation.

16. An electronic device, comprising:
a curved screen, wherein the curved screen comprises a side edge of the electronic device;
one or more processors;
a memory; and
one or more computer programs, wherein the one or more computer programs are stored in the memory, the one or more computer programs comprise instructions, and when the instructions are executed by the electronic device, the electronic device is enabled to perform the touch operation method according to any one of claims 1 to 15.

17. A computer-readable storage medium, comprising computer instructions, wherein when the computer instructions are run on a computer, the computer is enabled to perform the touch operation method according to any one of claims 1 to 15.

18. A computer program product, wherein when the computer program product runs on a computer, the computer is enabled to perform the touch operation method according to any one of claims 1 to 15.
